# EUROPEAN PATENT SPECIFICATION

(11) **EP 4 432 069 B1**
(45) Date of publication and mention of the grant of the patent: **17.06.2026**
(21) Application number: 24163148.0
(22) Date of filing: 13.03.2024
(51) Int. Cl.: G06F 3/12, G03G 15/00, H04N 1/00

(54) **INFORMATION PROCESSING APPARATUS, CONTROL METHOD, PROGRAM, AND NON-TRANSITORY COMPUTER-READABLE STORAGE MEDIUM STORING PROGRAM**
INFORMATIONSVERARBEITUNGSVORRICHTUNG, STEUERUNGSVERFAHREN, PROGRAMM UND NICHTFLÜCHTIGES COMPUTERLESBARES SPEICHERMEDIUM MIT DARAUF GESPEICHERTEM PROGRAMM
APPAREIL DE TRAITEMENT D'INFORMATIONS, PROCÉDÉ DE COMMANDE, PROGRAMME ET SUPPORT DE STOCKAGE LISIBLE PAR ORDINATEUR NON TRANSITOIRE STOCKANT UN PROGRAMME

(30) Priority: 14.03.2023 JP 2023039887
(43) Date of publication of application: 18.09.2024
(60) Divisional application: 26176189.4
(73) Proprietor: CANON KABUSHIKI KAISHA, Tokyo 146-8501 (JP)
(72) Inventor: MATSUDA, Shoichi, Tokyo, 146-8501 (JP)
(74) Representative: TBK

(56) References cited:
- JP-A- 2022 021 097
- JP-B2- 6 587 515
- US-A1- 2022 308 811

## Description

### BACKGROUND OF THE INVENTION

### Field of the Invention

The present invention relates to an information processing apparatus, a control method, a program, and a non-transitory computer-readable storage medium storing a program.

### Description of the Related Art

There is known a configuration that issues a print instruction to a printing apparatus connected to a host computer using a printer driver that is installed in the host computer as the control software of the printing apparatus. An Operating System (OS) that is basic software is installed in the host computer. The printer driver is configured in accordance with specifications defined by the OS, and is invoked from the OS to operate. A vender that provides a printing apparatus provides a printer driver suitable for the specifications of the OS, thereby providing a configuration for instructing the printing apparatus to perform printing using the OS.

In recent years, in Windows^{®}, a standard class driver (to be also referred to as a "standard driver" hereinafter) that is commonly usable by printing apparatuses provided by a plurality of vendors is provided. The standard driver is packaged together with the OS and can easily be used by connecting an arbitrary printing apparatus to a host computer. Hence, it is not necessary to separately install a printer driver that is suitable for a printing apparatus and unique to the model, resulting in high convenience. In addition, the standard driver is configured to designate a print function in accordance with PrintCapabilities generated based on information acquired from the connected printing apparatus. This allows a user using the standard driver to designate a print function according to the capability of the connected printing apparatus using one standard driver.

A function extension application (to be also referred to as an "extension application" hereinafter) can be associated with the standard driver. The extension application can be provided by a vendor that provides a printing apparatus. The vendor provides the extension application, thereby providing a function (extended function) that cannot be implemented only by the standard driver. Japanese Patent Laid-Open No. JP 2020 - 126 364 A describes that an auxiliary program excludes a paper size that is used at low possibility from main body capability values based on environmental information.

Document US 2022/308811 A1 describes a printing system capable of supporting a plurality of printable areas for one paper size. A non-transitory computer readable storage medium stores a program for causing a computer to perform a control method in an information processing apparatus including: first printing control software; and second printing control software that converts first format print data output by the first printing control software into second format print data, and the control method includes: a first creation step of creating raster data based on the first format print data; a medium determination step of performing determination of whether a printing-target medium is a medium that needs a margin larger than a regular size; and a margin insertion step of performing margin insertion processing for raster data created at the first creation step.

Document JP 2022 - 021 097 A describes an information processing device. A CPU of a PC receives setting of a paper size to be used for printing by a printer through a user IF. The paper size includes a paper length being a size in a conveyance direction of the paper in the printer and a paper width being a size in a direction orthogonal to the conveyance direction, and a settable paper size includes a standard size of cut paper with a determined paper width enabling borderless printing by the printer, a with-fixed user definition size, and a user definition size for receiving a numerical value input of the size of the paper width through the user IF. The CPU receives an execution instruction of borderless printing by the printer in the case of receiving the setting of the standard size and the width-fixed user definition size of the cut paper, and does not receive the execution instruction of borderless printing by the printer in the case of receiving the setting of the user definition size.

Document JP 6 587 515 B2 describes a printing system. The printing system includes: determination means that determines whether the sheet size, which is set by a user via a display unit, is a standard size or a non-standard size; decision means that, when the sheet size is a non-standard size, decides a unique sheet size from the arbitrary sheet size acquired via the display unit; and Japanese hyphenation processing means that sets the unique sheet size decided by the decision means to set the sheet size for printing setting and performs the Japanese hyphenation processing using the printing setting.

### SUMMARY OF THE INVENTION

However, Japanese Patent Laid-Open No. JP 2020 - 126 364 A does not describe that a user is allowed to arbitrarily set a paper size.

It is an object of the present invention to provide an improved information processing apparatus that allows a user to customize sheet information based on sheet information acquired from a printing apparatus, a corresponding control method, a corresponding program, and a corresponding non-transitory computer-readable storage medium.

This object is achieved by a control method according to claim 1, a non-transitory computer-readable storage medium according to claim 4, a program according to claim 7 and an information processing apparatus according to claim 8.

Advantageous further developments are as set forth in the respective dependent claims.

According to the present invention, it is possible to allow a user to customize sheet information based on sheet information acquired from a printing apparatus.

Further features of the present invention will become apparent from the following description of exemplary embodiments with reference to the attached drawings.

### BRIEF DESCRIPTION OF THE DRAWINGS

Fig. 1 is a block diagram showing the hardware configuration of a print system;
Figs. 2A and 2B are block diagrams each showing the software configuration of the print system;
Figs. 3A and 3B are views showing a PDC;
Fig. 4 is a flowchart showing processing when editing a PDC;
Figs. 5A and 5B are views showing a print setting screen provided by a print setting screen extension unit;
Figs. 6A and 6B are views showing a user-defined paper setting screen;
Fig. 7 is a view showing a user-defined paper setting screen;
Fig. 8 is a view showing print settings (PT);
Fig. 9 is a view showing management data that stores values of user-defined paper sizes;
Fig. 10 is a flowchart showing processing of the print setting screen extension unit;
Fig. 11 is a flowchart showing processing of the print setting screen extension unit;
Fig. 12 is a flowchart showing processing of the print setting screen extension unit;
Fig. 13 is a flowchart showing processing of the print setting screen extension unit;
Fig. 14 is a view showing management data that stores values of user-defined paper sizes;
Figs. 15A and 15B are views showing a user-defined paper setting screen;
Fig. 16 is a view showing management data that stores values of user-defined paper sizes;
Figs. 17A and 17B are views showing a user-defined paper setting screen;
Fig. 18 is a view showing set values of paper sizes;
Figs. 19A and 19B are flowcharts showing processing of a print setting screen extension unit;
Fig. 20 is a flowchart showing processing of the print setting screen extension unit;
Figs. 21A to 21C are views showing warning screens;
Fig. 22 is a flowchart showing processing of the print setting screen extension unit;
Fig. 23 is a flowchart showing processing of the print setting screen extension unit;
Fig. 24 is a flowchart showing processing of a print function extension unit;
Fig. 25 is a view showing a Form DB;
Fig. 26 is a flowchart showing processing of the print setting screen extension unit; and
Fig. 27 is a flowchart showing processing of the print setting screen extension unit.

### DESCRIPTION OF THE EMBODIMENTS

Hereinafter, examples useful for understanding the invention but not covered by the claims, and embodiments will be described in detail with reference to the attached drawings. Note, the following examples useful for understanding the invention but not covered by the claims, and embodiments are not intended to limit the scope of the claimed invention. Multiple features are described in the examples useful for understanding the invention and the embodiments, but limitation is not made an invention that requires all such features, and multiple such features may be combined as appropriate. Furthermore, in the attached drawings, the same reference numerals are given to the same or similar configurations, and redundant description thereof is omitted.

### [First example useful for understanding the invention but not covered by the claimsthe]

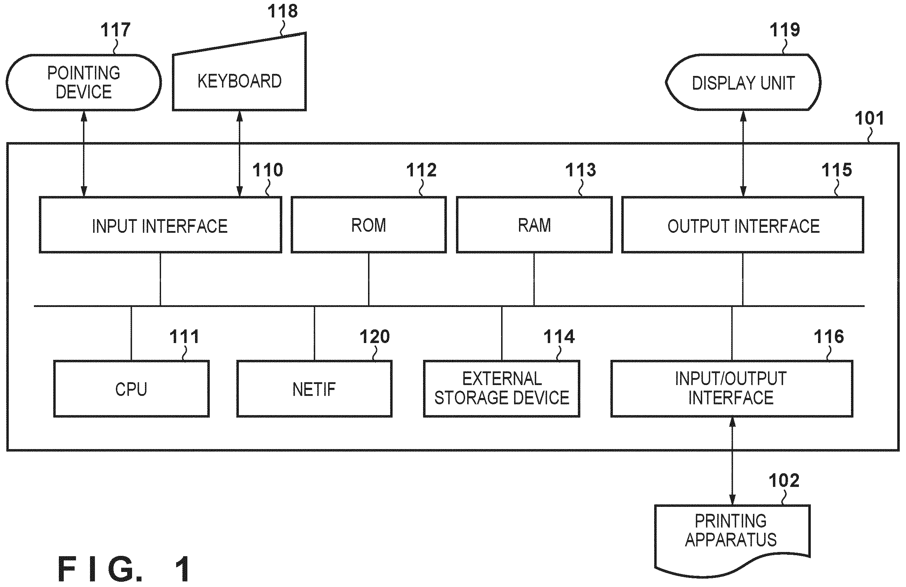

Fig. 1 is a block diagram showing the hardware configuration of a print system. In Fig. 1, a host computer 101 is an example of an information processing apparatus, and includes an input interface 110, a CPU 111, a ROM 112, a RAM 113, an external storage device 114, an output interface 115, and an input/output interface 116. An input device such as a keyboard 118 or a pointing device 117 is connected to the input interface 110, and a display device such as a display unit 119 is connected to the output interface 115. A NETIF 120 is a network interface and performs control to transfer data to/from an external apparatus via a network.

An initialization program is stored in the ROM 112. The external storage device 114 stores an application program group, an Operating System (OS), print data generation software, and various kinds of data. The RAM 113 is used as a work memory when executing various kinds of programs stored in the external storage device 114, and the various kinds of programs can operate in the host computer 101.

Note that in this example useful for understanding the invention, the CPU 111 performs processing in accordance with the procedure of a program stored in the ROM 112, thereby executing processing according to a function (to be described later) in the host computer 101 and a flowchart (to be described later). A printing apparatus 102 that is a device is connected to the host computer 101 via the input/output interface 116. Here, the host computer 101 and the printing apparatus 102 are separately formed. However, these may be formed as one information processing apparatus. Note that as the printing apparatus 102, an inkjet printer configured to perform printing by discharging ink onto a print surface will be described as an example. However, printing may be executed by another method (for example, an electrophotographic method). In addition, as the host computer 101, a desktop personal computer, a smartphone, or a laptop may be used. In a case where the host computer 101 and the printing apparatus 102 are connected via a network, the network can be any of a wired network, a wireless network, and a network including both. The network may include an apparatus different from the host computer 101 and the printing apparatus 102, for example, a router operating as an access point.

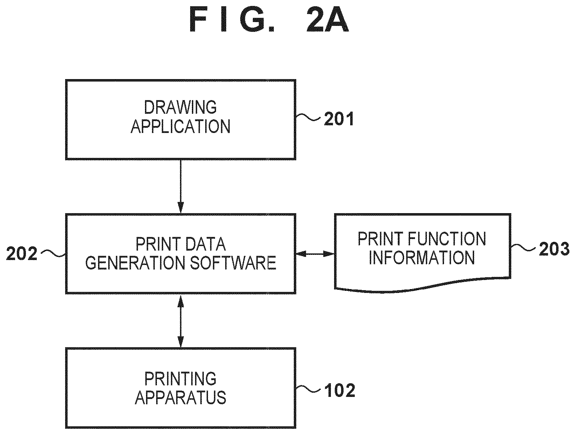

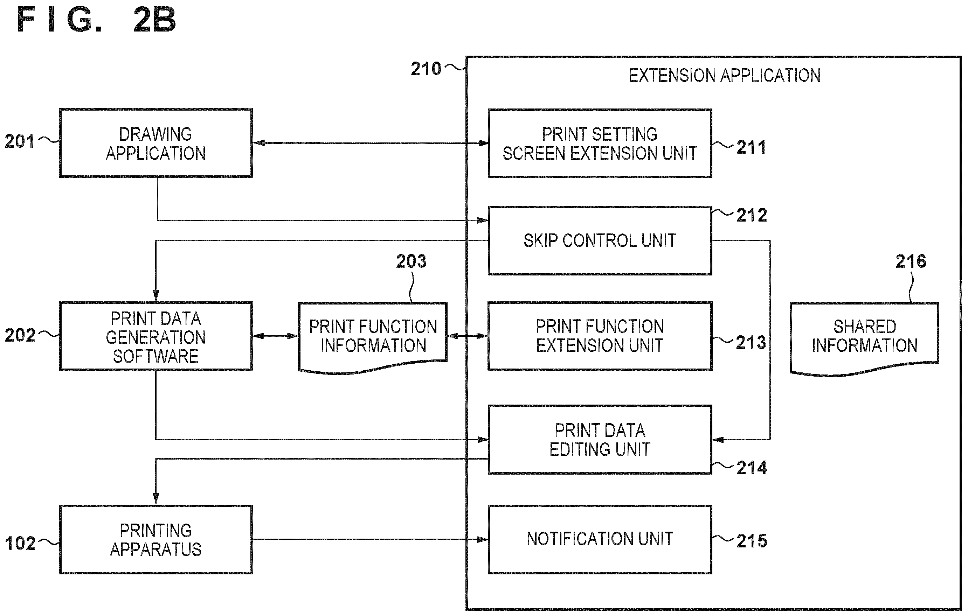

Figs. 2A and 2B are block diagrams each schematically showing the configuration of the print system by focusing on software. A description will be provided assuming a print system using the host computer 101 in which Windows^{®}11 of Microsoft^{®} is installed as an OS. Fig. 2Ais a block diagram showing a general configuration in a case where an extension application 210 is not associated with print data generation software 202 and the printing apparatus 102.

A drawing application 201 is software that creates a content (drawing data) to be printed. For example, this corresponds to a document creation application or a spreadsheet application. Upon receiving a print request from a user, the drawing application 201 issues a print instruction to the OS. The print instruction includes print setting information used to instruct the operations of the print data generation software 202 and the printing apparatus 102. The print setting information will also be referred to as a Print Ticket (to be referred to as a "PT" hereinafter).

To output the print setting information, the drawing application 201 can display a print setting screen provided by one of the print data generation software 202, the OS, and the drawing application 201. The print setting screen includes a setting item (to be also referred to as a "control item" hereinafter) representing a print function settable in accordance with capability information (information settable as a print setting) acquired from the print data generation software 202, and a control item indicating its set value. The capability information will also be referred to as Print Capabilities (to be referred to as "PC" hereinafter). The print data generation software 202 decides the PC based on print function information 203. The print function information 203 is data representing print functions, in which all settable print functions, set values thereof, and the exclusive relationship between the set values are described. The print function information 203 will also be referred to as Print Device Capabilities (PDC). The print function information 203 is included in the configuration file of the print data generation software 202 and arranged as an unchangeable file in the external storage device 114. Alternatively, the print function information 203 may be generated dynamically by the print data generation software 202. More specifically, the print data generation software 202 or the OS can be configured to acquire, from the printing apparatus 102, attribute data of the printing apparatus and generate the print function information 203 in accordance with the attribute information in the acquired attribute data. Attribute information is, for example, paper information (sheet information) supported by the printing apparatus 102. Note that if the print function information 203 is dynamically generated, the generated print function information 203 can be edited. The attribute data of the printing apparatus, which is acquired from the printing apparatus 102, is a response acquired by issuing a Get-Printer-Attributes operation of the Internet Print Protocol (IPP) to the printing apparatus 102. The response includes attribute information representing the functions that can be designated in the printing apparatus 102 (the capabilities of the printing apparatus) and set values associated with the attribute information. This response is stored in the RAM 113.

With this configuration, the print data generation software 202 can be configured such that the user can designate a print function usable in each printing apparatus 102 in accordance with the connected printing apparatus 102. That is, even if a printing apparatus having a different function or a printing apparatus developed by a different vendor is connected, the print data generation software 202 can be configured such that the user can designate a usable print function in accordance with the connected printing apparatus. Note that a configuration using IPP Class Driver included in Windows^{®}11 as an example of the print data generation software 202 will be described here. The IPP Class Driver is a printer driver that executes print processing in accordance with the specifications of a standard print protocol called Internet Print Protocol (IPP) and is packaged together with the OS. The IPP Class Driver is not a unique printer driver according to the model of the printing apparatus 102 but a standard class driver commonly usable by a plurality of printing apparatuses. The IPP Class Driver acquires the capability information of the connected printing apparatus 102 and generates the print function information 203 based on the information such that the user can designate a print function supported by the connected printing apparatus 102.

Based on the print instruction output from the drawing application 201, the OS generates intermediate data (also called input data) and transfers it to the print data generation software 202. Note that the data output by the drawing application 201 for printing is data in the Graphic Device Interface format (data in the GDI format) or data in the XML Paper Specification format (data in the XPS format). Assume that the IPP Class Driver is used as the print data generation software 202. In this case, if the data output from the drawing application 201 is data in the GDI format, the OS converts the data in the GDI format output from the drawing application 201 into data in the XPS format. Then, the OS transfers the converted data in the XPS format as intermediate data to the print data generation software 202. If the data output from the drawing application 201 is data in the XPS format, the OS transfers the data in the XPS format as intermediate data to the print data generation software 202. Note that the intermediate data includes drawing data that is the information of a picture to be formed on a paper surface as a print medium and print setting information set by the user. Note that this example useful for understanding the invention will describe "paper" as an example of the print medium.

The print data generation software 202 converts the acquired intermediate data into print data interpretable by the printing apparatus 102, and transmits the print data to the printing apparatus 102. Note that the print data includes the drawing data that is the information of the picture to be formed on a paper surface and print setting attribute information (attribute information that designates print settings) generated based on the print setting information set by the user. The print setting attribute information includes attribute information representing functions that can be designated in the printing apparatus 102 (the capabilities of the printing apparatus) and set values associated with the attribute information. The print data generation software 202 has a function of converting at least a part of print setting information set by the user into attribute information defined by the IPP to obtain print setting attribute information.

The printing apparatus 102 performs printing on a paper surface based on the print data sent from the print data generation software 202. At this time, the printing apparatus 102 forms the drawing data included in the print data on the paper surface by an operation according to the print setting attribute information included in the print data. The print setting attribute information includes attribute information for designating print quality (image quality priority, speed priority, or the like), double-sided printing, and the like and set values thereof. For example, if the print setting attribute information includes attribute information for designating double-sided printing, the printing apparatus 102 executes double-sided printing.

Fig. 2B is a block diagram showing a configuration in a case where the extension application 210 is associated with the print data generation software 202 and the printing apparatus 102. Note that components and processes which are not particularly mentioned below are the same as in Fig. 2A.

The extension application 210 is software configured to extend the function of the print data generation software 202, and is software that is not included (packaged) in the OS in advance. For this reason, the user operates the host computer 101 to download the extension application 210 from a server via the Internet and install it. Alternatively, the extension application 210 may automatically be installed based on connection of the printing apparatus 102 to the host computer 101. More specifically, if the printing apparatus 102 is connected to the host computer 101, the OS acquires device identification information from the printing apparatus 102. The OS may download the extension application 210 corresponding to the acquired device identification information from a server via the Internet and install it. That is, the print data generation software 202 and the extension application 210 are held as separate files in the host computer 101.

Note that the print data generation software 202 and the extension application 210 are sometimes updated and upgraded, but the updating processes are performed at different timings. That is, the timing of acquiring the print data generation software 202 by the host computer 101 and the timing of acquiring the extension application 210 are different. In addition, the trigger to acquire the print data generation software 202 by the host computer 101 and the trigger to acquire the extension application 210 are also different. Note that if the extension application 210 is installed, the OS associates the extension application 210 with the print data generation software 202 and the printing apparatus 102.

The extension application 210 according to this example useful for understanding the invention includes a print setting screen extension unit 211, a skip control unit 212, a print function extension unit 213, a print data editing unit 214, and a notification unit 215. In addition, the extension application 210 includes shared information 216 that can commonly be accessed from the units. The substance of the shared information 216 is, for example, a file stored in the external storage device 114 or information stored in the RAM 113. Using an Application Program Interface (API) provided by the OS, the extension application 210 writes or reads information in or from the shared information 216.

Note that the extension application 210 may end the operation every time the processing of each unit ends. In this case, the OS activates the extension application 210 every time a request to use each unit is received. Furthermore, another form may be adopted. For example, if the processing of the print setting screen extension unit 211 ends, the OS ends the operation of the extension application 210. However, even if the processing of the skip control unit 212 ends, the OS may keep the extension application 210 activated. Furthermore, the extension application 210 may cancel the processing in the processing of each unit. If the processing is canceled, a job in progress on a print queue is deleted by the OS.

Upon receiving a print request from the user, the drawing application 201 issues a print instruction to the OS. In this configuration as well, the drawing application 201 can display the print setting screen, similar to the configuration shown in Fig. 2A. In this configuration, the print setting screen provided by the extension application 210 is displayed. More specifically, the print setting screen provided by the print setting screen extension unit 211 included in the extension application 210 is displayed. Note that whether the print setting screen provided by the print setting screen extension unit 211 is displayed depends on the operation of the user.

Furthermore, if the drawing application 201 accepts the print request from the user, and a print instruction is issued to the OS, the OS activates the skip control unit 212. The skip control unit 212 performs control concerning whether to skip the processing of the print data generation software 202. The skip control unit 212 does not acquire the intermediate data or the print setting information. After the skip control processing of the skip control unit 212, the OS generates intermediate data based on the print instruction output from the drawing application 201, and transfers the intermediate data to the print data generation software 202. Here, if skip control is not performed by the skip control unit 212, the intermediate data is processed by the print data generation software 202 into print data interpretable by the printing apparatus 102, and transferred to the print data editing unit 214. On the other hand, if skip of the print data generation software 202 is performed, the intermediate data is transferred to the print data editing unit 214 without being processed by the print data generation software 202. Thus, the intermediate data can be processed by the print data editing unit 214.

The print data editing unit 214 edits intermediate data transferred from the print data generation software 202 or print data processed by the print data generation software 202. "Layout printing" will be described as an example of editing contents. Based on print setting information of "layout printing" received from the OS, the print data editing unit 214 changes the layout of intermediate data or print data. Furthermore, the print data editing unit 214 can display a UI screen on the display unit 119, and can display the layout result of the intermediate data or the print data as a preview screen. Note that in the print data editing unit 214, if the screen is kept open, the print data is not transmitted to the printing apparatus 102. When the screen is closed, print data transmission processing operates.

After the print data editing unit 214 edits the print data, the print data is transmitted to the printing apparatus 102 via the OS. The printing apparatus 102 performs printing on a paper surface based on the received print data. Note that if the print data generation software 202 is skipped by the skip control unit 212, the print data editing unit 214 may convert the received intermediate data into print data interpretable by the printing apparatus 102. Also, a function provided by the OS may be used to convert the intermediate data into print data.

The extension application 210 includes the print function extension unit 213. The print function extension unit 213 can edit the print function information 203 (PDC) generated by the print data generation software 202 or the OS. The print function extension unit 213 can thus add a function provided by the extension application 210, and add a function supported by the printing apparatus 102 but not by the print data generation software 202. In addition, the print function extension unit 213 can add an exclusive relationship between the set values of print functions. The OS activates the print function extension unit 213 when the extension application 210 is associated with the printing apparatus 102 and the print data generation software 202 for the first time. Furthermore, the OS may activate the print function extension unit 213 at another timing such as the activation timing of the OS. This allows the print function extension unit 213 to detect an extended function and add it to the print function information 203 in a case where an optional device is added later to the printing apparatus 102, and the function associated with printing is extended. Note that the optional device is, for example, a two-level roll unit or a finisher.

In addition, the extension application 210 includes the notification unit 215. The notification unit 215 can display a notification to the user in response to the occurrence of an error in the printing apparatus 102. For example, if a paper-out error occurs in the printing apparatus 102, the print data generation software 202 detects it, and the OS displays a message on the display unit 119 using a notification function called a toast notification that is a function of the OS. When the user presses the toast notification, the notification unit 215 of the extension application 210 is invoked by the OS, and the UI screen of the notification unit 215 is displayed. On the UI screen of the notification unit 215, for example, a detailed message of the paper-out error or a paper filling method can be displayed.

Note that once print data is transmitted to the printing apparatus 102, the extension application 210 cannot perform screen display such as a guide associated with the print data halfway through the processing of each unit.

Note that the configuration of the extension application 210 for implementing this example useful for understanding the invention is not limited to a configuration including all the above-described functions (units), and may have only some of the functions or may have other functions. The extension application 210 will sometimes simply be referred to as print software. As described above, it can be said that the extension application 210 has at least one of functions to be described below:
- a function of displaying a setting screen or controlling display of a setting screen (the print setting screen extension unit 211)
- a function of controlling whether to skip the processing of the print data generation software 202 (the skip control unit 212)
- a function of editing print data to be transmitted to the printing apparatus 102 (the print data editing unit 214)
- a function of extending a function that can be designated by the print data generation software 202 (the print function extension unit 213) · a function of displaying a screen in response to the occurrence of an error in the printing apparatus 102 (the notification unit 215).

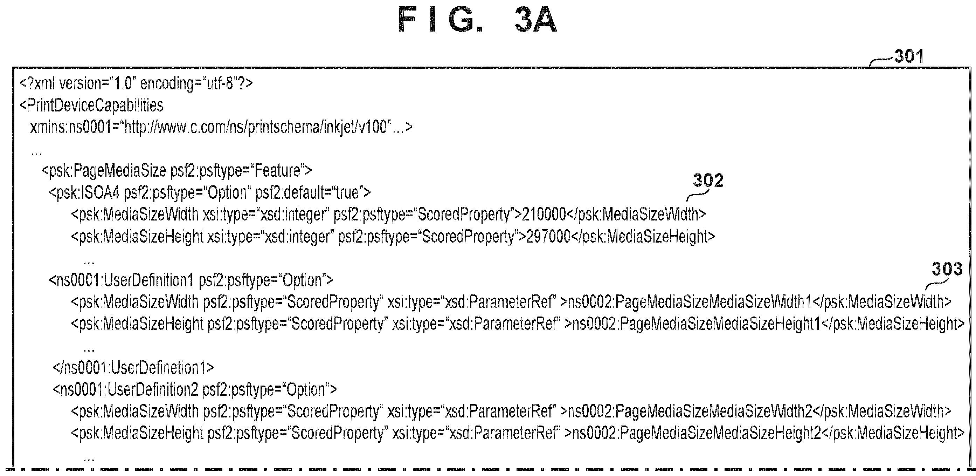

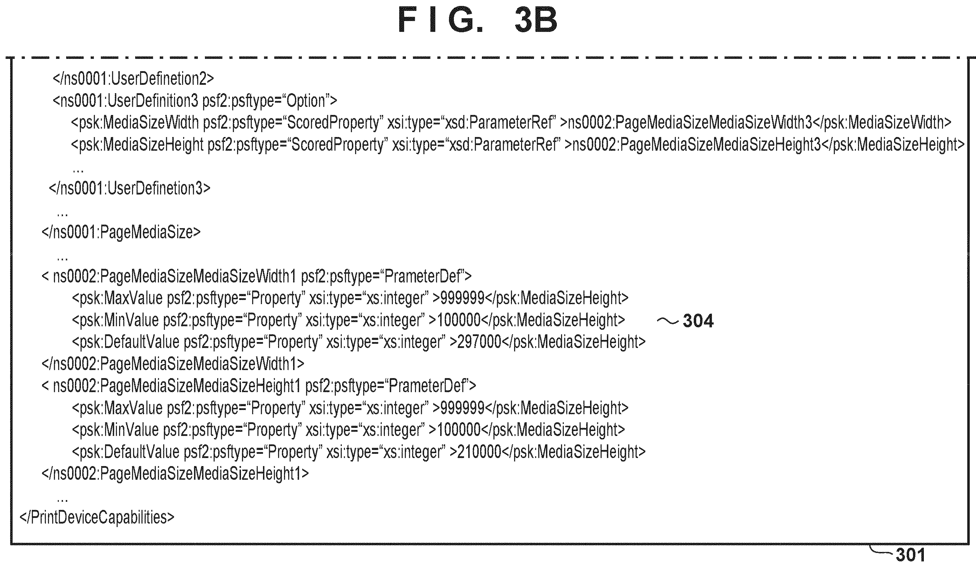

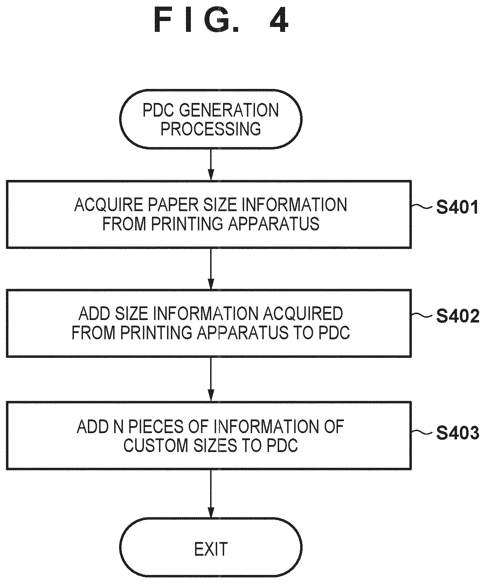

Figs. 3A and 3B are views showing an example of a PDC generated by the print data generation software 202 acquiring print function information from the printing apparatus 102. A PDC 301 includes information of a function (Feature) supported by the printing apparatus 102 and information of a set value (Option) in a function. The PDC 301 shown in Figs. 3A and 3B indicates a PDC edited by processing shown in Fig. 4.

Information 302 indicates that a set value (Option) of A4 size (ISOA4) is supported as a paper size (PageMediaSize). Also, the information 302 indicates that as the paper size, the width (MediaSizeWidth) is 210,000 µm, and the height (MediaSizeHeight) is 297,000 µm.

Information 303 indicates a customizable size UserDefinition1 unique to the vendor. Also, the information 303 indicates that the width (MediaSizeWidth) and the height (MediaSizeHeight) are arbitrary parameters. Figs. 3A and 3B show these as PageMediaSizeMediaSizeWidth1 and PageMediaSizeMediaSizeHeight1. For the arbitrary parameters PageMediaSizeMediaSizeWidth1 and PageMediaSizeMediaSizeHeight1, the maximum value, the minimum value, and the initial value are defined by information 304. Note that the maximum value is represented by MaxValue, the minimum value is represented by MinValue, and the initial value is represented by DefaultValue. These parameters are parameters settable as print settings (Print Ticket: PT). These parameters can be used as an arbitrary paper size defined by the user (user-defined paper size) by designating the width and the height of the paper size as the PT.

Similarly, UserDefinition2 and UserDefinition3 are associated with different arbitrary parameters. Thus, a total of three user-defined paper sizes including UserDefinition1, UserDefinition2, and UserDefinition3 can be used as the user-defined paper sizes. In this example useful for understanding the invention, an example in which three user-defined paper sizes can be used will be described. However, the number of user-defined paper sizes may be different.

As described above, in this example useful for understanding the invention, the print function extension unit 213 edits the PDC to add the description of a user-defined paper size. At this time, the height/width of each user-defined paper size is defined as a custom size, and the maximum value, the minimum value, and the initial value supported by the printing apparatus 102 are defined for the custom size. The thus edited PDC allows the user to customize paper within the range of values supported by the printing apparatus 102.

Fig. 4 is a flowchart showing processing when the print function extension unit 213 edits the print function information 203 (PDC 203) when the extension application 210 is associated with the printing apparatus 102 and the print data generation software 202 for the first time. Processing shown in Fig. 4 is implemented by, for example, the CPU 111 reading out a program stored in the ROM 112 to the RAM 113 and executing it.

In step S401, the print function extension unit 213 acquires information of a paper size from the printing apparatus 102. Next, in step S402, if the information of the paper size acquired from the printing apparatus 102 does not exist in the PDC 203, the print function extension unit 213 edits the PDC 203 by adding the information. After that, in step S403, the print function extension unit 213 adds N pieces of information of custom sizes to the PDC. In this example useful for understanding the invention, an example in which three pieces of information of custom sizes are added will be described. The user can define and use arbitrary paper sizes as many as the number of pieces of information of the custom sizes added here. If the drawing application 201 accepts an instruction to display a print setting screen by a user operation, a print setting screen provided by the print setting screen extension unit 211 of the extension application 210 is displayed. Note that in step S403, the print function extension unit 213 also adds information corresponding to the information 304 in Figs. 3A and 3B to the PDC.

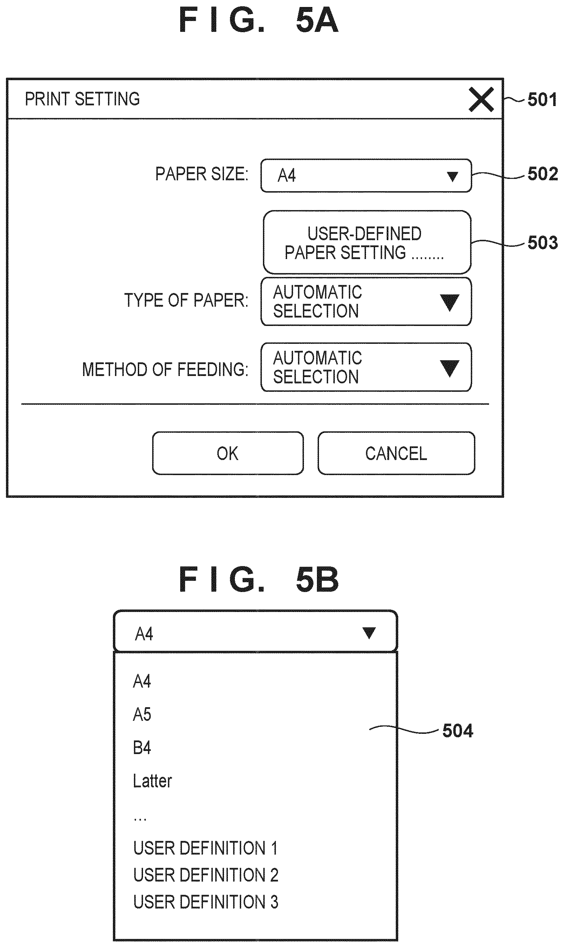

Fig. 5A is a view showing an example of the print setting screen provided by the print setting screen extension unit 211 when the drawing application 201 instructs to display the print setting screen provided by the print setting screen extension unit 211. A print setting screen 501 includes a combo box of a paper size 502, and a user-defined paper setting button 503 that displays a screen to edit a user-defined paper size. Fig. 5B shows a state in which the combo box of the paper size 502 is selected, and each paper size set value 504 can be selected by the user. As each paper size set value 504, a paper size defined in the PDC (PDC 301) edited by the processing shown in Fig. 4 is displayed. For this reason, three custom sizes (UserDefinition1 to 3) added in step S403 are displayed as user definition 1, user definition 2, and user definition 3.

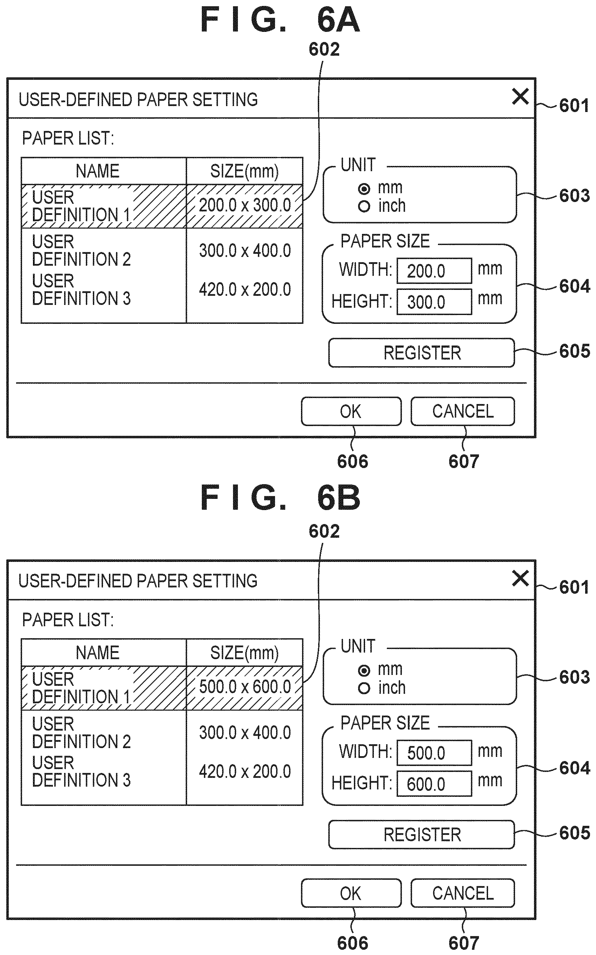

Fig. 6A is a view showing an example of a user-defined paper setting screen displayed when the user-defined paper setting button 503 of the print setting screen 501 is pressed. The user-defined paper setting screen 601 can display the names and lengths of currently registered custom sizes as a list in a paper list 602, and the user can select a user-defined paper size whose size is to be changed. A state in which user definition 1 is selected in the paper list 602 is shown. The user-defined paper setting screen 601 includes a display unit 603, and the unit of sizes displayed in the paper list 602 or sizes displayed in a paper size setting 604 can be changed to millimeter or inch. In the paper size setting 604, the user-defined paper size selected in the paper list 602 is displayed, and the user can change the values.

Fig. 6B shows an example of display when the size of user definition 1 is changed to a width of 500 mm and a height of 600 mm. The user selects, from the paper list 602, a user-defined paper size whose size is to be changed. The user then inputs the width and height to be changed in the paper size setting 604 and presses a registration button 605. Then, as shown in Fig. 6B, the width and height of user definition 1 are changed. At this time, updating of parameters associated as the width and height of user definition 1 on the print setting (PT) and updating of management data stored for initial values at the time of activation are performed.

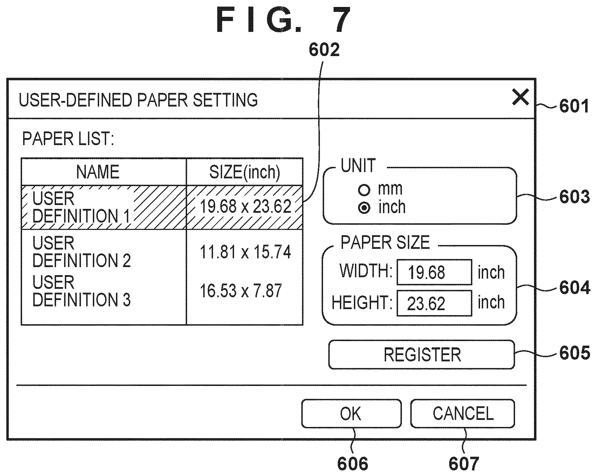

Fig. 7 shows an example of display when the display unit 603 in Fig. 6B is switched to inch. If the display unit 603 is changed to inch, the sizes in the paper list 602 and the paper size setting 604 are displayed in inches. Note that if the user-defined paper setting screen 601 is closed by pressing an OK button 606, the display unit 603 is held, and the sizes are displayed in the same display unit when the user-defined paper setting screen 601 is opened next. If the user-defined paper setting screen 601 is closed by pressing a cancel button 607, the display unit may not be held.

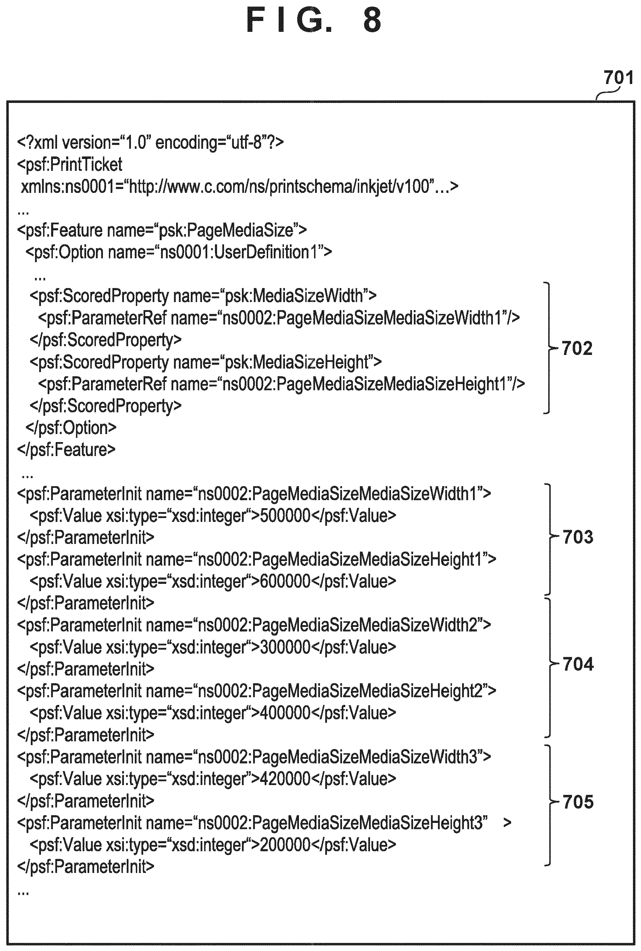

Fig. 8 is a view showing an example of print settings (PT) when user definition 1 is defined in the paper size 502 using the settings of the user-defined paper size shown in Fig. 6B. In a PT 701, as information 702, user definition 1 (UserDefinition1) is set as a paper size (PageMediaSize). As information 703, the width (PageMediaSizeMediaSizeWidth1) is set to 500,000 µm, and the height (PageMediaSizeMediaSizeHeight1) is set to 600,000 µm. Also, the width and height of user definition 2 are set as information 704, and the width and height of user definition 3 are set as information 705. The print setting (PT) in Fig. 8 is temporary data when performing printing and is therefore data that disappears when the drawing application 201 in which the print setting is opened is ended. For this reason, the set user-defined paper size is held and left as nonvolatile data such that the same user-defined paper size can be used at the next time of print setting activation.

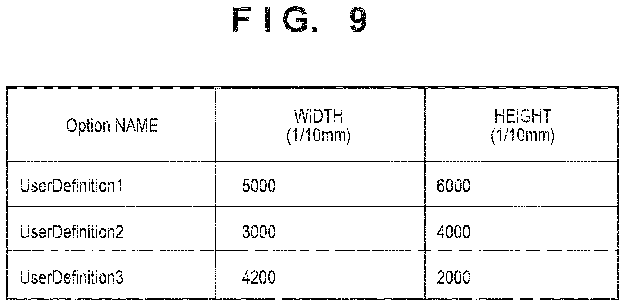

Fig. 9 is a view showing an example of management data that stores the values of user-defined paper sizes at the next time of print setting activation, and an Option name, a width, and a height corresponding to each user-defined paper size are stored. The management data is stored as nonvolatile data in the shared information 216.

If the drawing application 201 accepts an instruction to display a print setting screen by a user operation, a print setting screen provided by the print setting screen extension unit 211 of the extension application 210 is displayed.

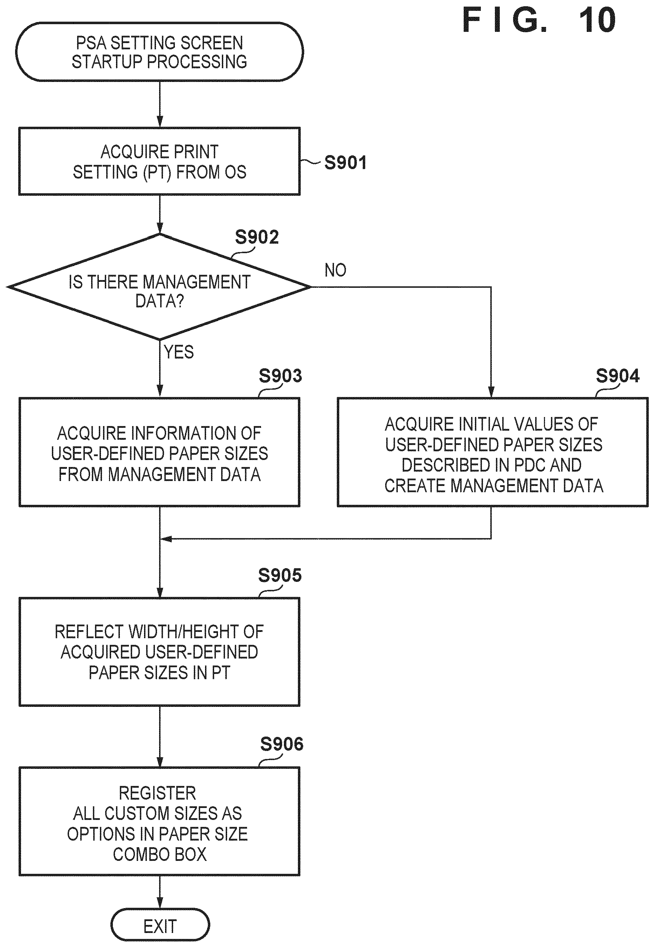

Fig. 10 is a flowchart showing processing of displaying the print setting screen provided by the print setting screen extension unit 211. Processing shown in Fig. 10 is implemented by, for example, the CPU 111 reading out a program stored in the ROM 112 to the RAM 113 and executing it.

In step S901, the print setting screen extension unit 211 acquires a print setting (PT) from the OS. Next, in step S902, the print setting screen extension unit 211 determines whether the management data of user-defined paper sizes exists in the shared information 216. If it is determined that the management data of user-defined paper sizes exists, the process advances to step S903. If it is determined that the management data of user-defined paper sizes does not exist, the process advances to step S904. For example, at the first time of activation, it is determined that the management data of user-defined paper sizes does not exist.

In step S904, the print setting screen extension unit 211 acquires default values defined in the information 304 of the PDC 301 and creates management data of user-defined paper sizes in the shared information 216 based on the default values. On the other hand, in step S903, the print setting screen extension unit 211 acquires each user-defined paper size from the management data. The default values are values defined in the information 304 shown in Figs. 3A and 3B.

In step S905, the print setting screen extension unit 211 reflects the width and height of each user-defined paper size acquired in step S903 or S904 on the print setting (PT). In step S906, the print setting screen extension unit 211 registers each user-defined paper size as an item of the combo box of the paper size 502 in the print setting screen 501, and displays the print setting screen. Note that when registering a user-defined paper size as an option of the paper size, a unique name may be registered. For example, in this example useful for understanding the invention, as indicated by the paper size option 504, user-defined paper sizes are registered as user definition 1, user definition 2, and user definition 3.

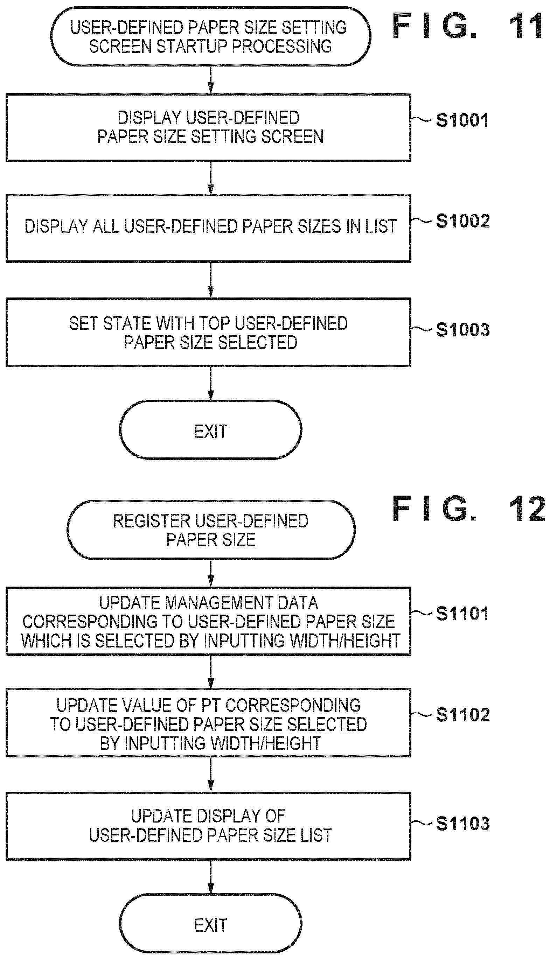

Fig. 11 is a flowchart showing processing of the print setting screen extension unit 211, which is executed when the user-defined paper setting button 503 is pressed in the print setting screen 501. Processing shown in Fig. 11 is implemented by, for example, the CPU 111 reading out a program stored in the ROM 112 to the RAM 113 and executing it.

If the user-defined paper setting button 503 is pressed, in step S1001, the print setting screen extension unit 211 displays the user-defined paper setting screen 601. In step S1002, the print setting screen extension unit 211 displays a list of the names, widths, and heights of the user-defined paper sizes acquired in step S903 or S904. The name displayed here is the same as the name registered in the paper size option 504. In step S1003, the print setting screen extension unit 211 sets a state in which the user-defined paper size at the top of the setting list 602 is selected, and displays the width and height of the selected user-defined paper size in the paper size setting 604.

Fig. 12 is a flowchart showing processing of the print setting screen extension unit 211, which is executed when the registration button 605 is pressed in the user-defined paper setting screen 601. Processing shown in Fig. 12 is implemented by, for example, the CPU 111 reading out a program stored in the ROM 112 to the RAM 113 and executing it.

If the registration button 605 is pressed in the user-defined paper setting screen 601, in step S1101, the print setting screen extension unit 211 updates the management data of the user-defined paper size selected in the paper list 602 by the width and height input in the paper size setting 604. In step S1102, then print setting screen extension unit 211 updates the print setting (PT) of the user-defined paper size selected in the paper list 602 by the width and height input in the paper size setting 604. In step S1103, then print setting screen extension unit 211 updates the width and height of the user-defined paper size selected in the paper list 602 by the width and height input in the paper size setting 604.

As described above, in the print system according to this example useful for understanding the invention, the extension application allows the user to register a plurality of arbitrary paper sizes by the extension application, and the user can perform printing by setting an arbitrary registered paper size.

### [First Embodiment]

The first embodiment will be described below concerning differences from the first example useful for understanding the invention. In this embodiment, a configuration that enables display (registration) and non-display (deletion) of user-defined paper sizes, and display using an arbitrary name will be described.

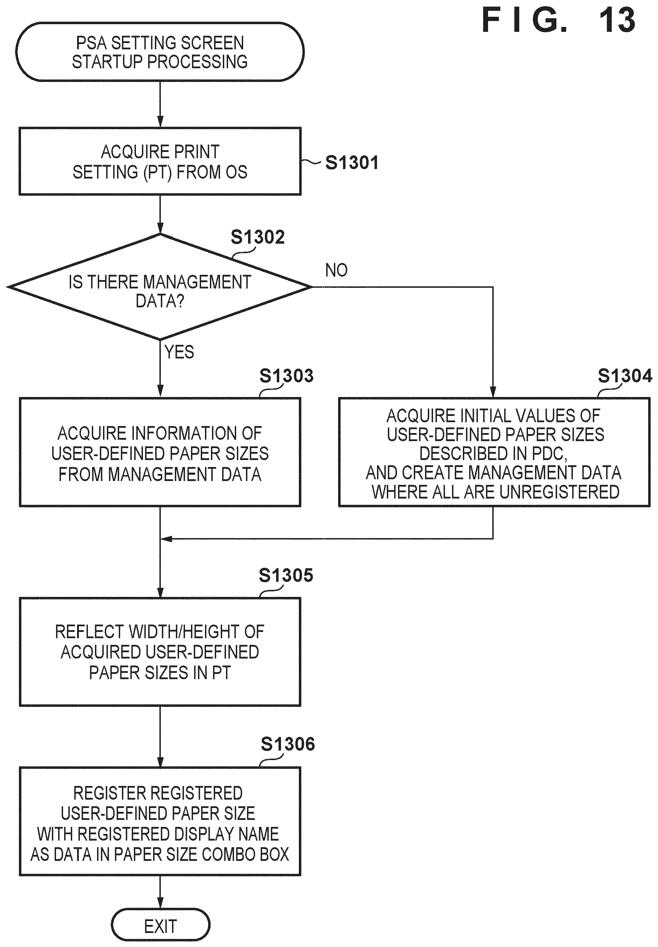

Fig. 13 is a flowchart showing processing executed when a print setting screen extension unit 211 displays a print setting screen in this embodiment. Processing shown in Fig. 13 is implemented by, for example, a CPU 111 reading out a program stored in a ROM 112 to a RAM 113 and executing it.

Steps S1301 to S1303 and S1305 are the same as described concerning steps S901 to S903 and S905 in Fig. 10, and a description thereof will be omitted.

If it is determined in step S1302 that the management data does not exist, in step S1304, the print setting screen extension unit 211 creates management data in which each user-defined paper size acquired from a PDC 301 is defined as unregistered.

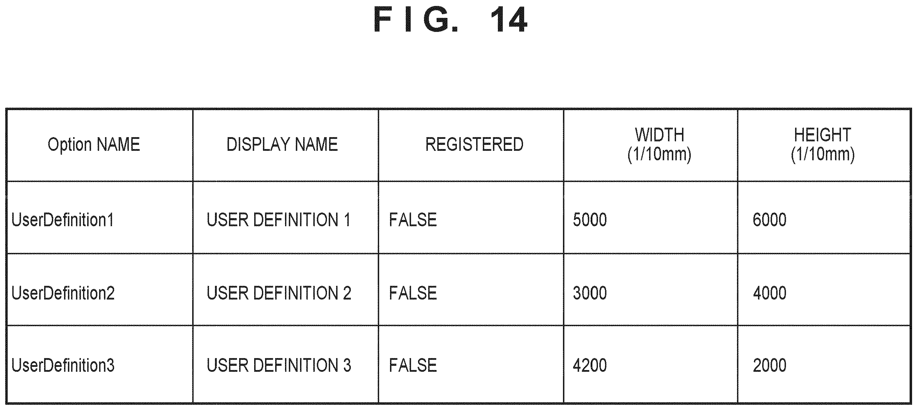

Fig. 14 shows an example of management data created in step S1304. In this embodiment, display names and whether a user-defined paper size is already registered or not are further managed as management data, unlike Fig. 9. If management data is created concerning an unregistered user-defined paper size, as shown in Fig. 14, an item "registered" is managed as "FALSE" indicating "unregistered". Thus, registered user-defined paper sizes and unregistered user-defined paper sizes are identifiably managed.

In step S1306, the print setting screen extension unit 211 registers only registered user-defined paper sizes as data in a paper size combo box. That is, a user-defined paper size that is managed as "unregistered" is not registered as data in the paper size combo box. Hence, if a user does not register a user-defined paper size, the user-defined paper size is not displayed in a paper size set value 504.

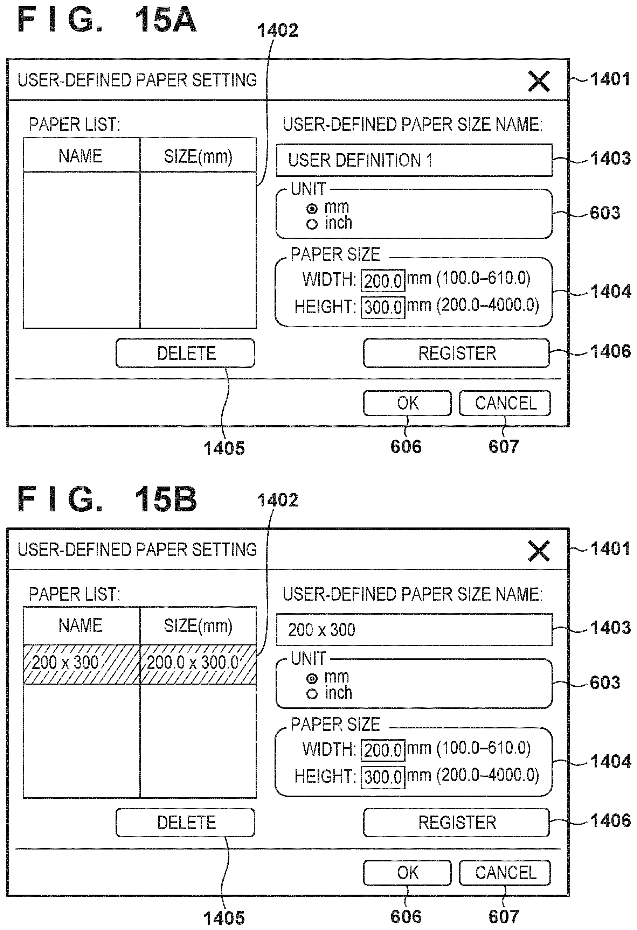

Fig. 15A is a view showing an example of a user-defined paper setting screen displayed when a user-defined paper setting button 503 in a print setting screen 501 is pressed. The user-defined paper setting screen 1401 according to this embodiment includes a paper list 1402 that displays registered user-defined paper sizes. Fig. 15A shows an example in a case where all user-defined paper sizes are unregistered, and nothing is displayed in the paper list 1402.

A user-defined paper size name field 1403 is an input field used to register a user-defined paper size with an input name. In a paper size 1404, the width and height of a user-defined paper size to be registered can be input, and a support range acquired from a printing apparatus 102 is displayed. If the user presses a registration button 1406, the user-defined paper size is registered with the name input in the user-defined paper size name field 1403 and the width and height input in the paper size 1404.

Fig. 15B shows a user-defined paper setting screen after the registration button 1406 is pressed in a state in which "200 x 300" is input in the user-defined paper size name field 1403, "200.0" is input to width in the paper size 1404, and "300.0" is input to height. The registered user-defined paper size is displayed in the paper list 1402. At this time, the set name and paper size are displayed.

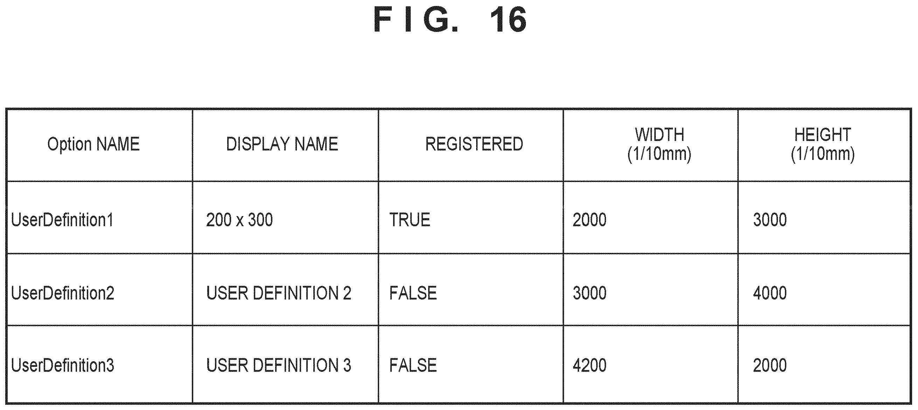

Fig. 16 is a view showing an example of management data after registration by the registration button 1406. As shown in Fig. 16, for Option of UserDefinition1, the item "registered" is "TRUE", and the name, width, and height input in the user-defined paper setting screen 1401 are stored. Here, if the user registers the second user-defined paper size, this is registered as Option of UserDefinition2.

A deletion button 1405 can delete a user-defined paper size selected in the paper list 1402. In the user-defined paper setting screen shown in Fig. 15B, the user selects the user-defined paper size of "200 x 300" in the paper list 1402, and presses the deletion button 1405. Then, "TRUE" in the item "registered" of the management data is changed to "FALSE" indicating "unregistered". As a result, the user-defined paper size is not displayed in the paper list 1402 anymore.

As described above, by the configuration that displays only registered user-defined paper sizes, the user can easily recognize user-defined paper sizes registered by himself/herself.

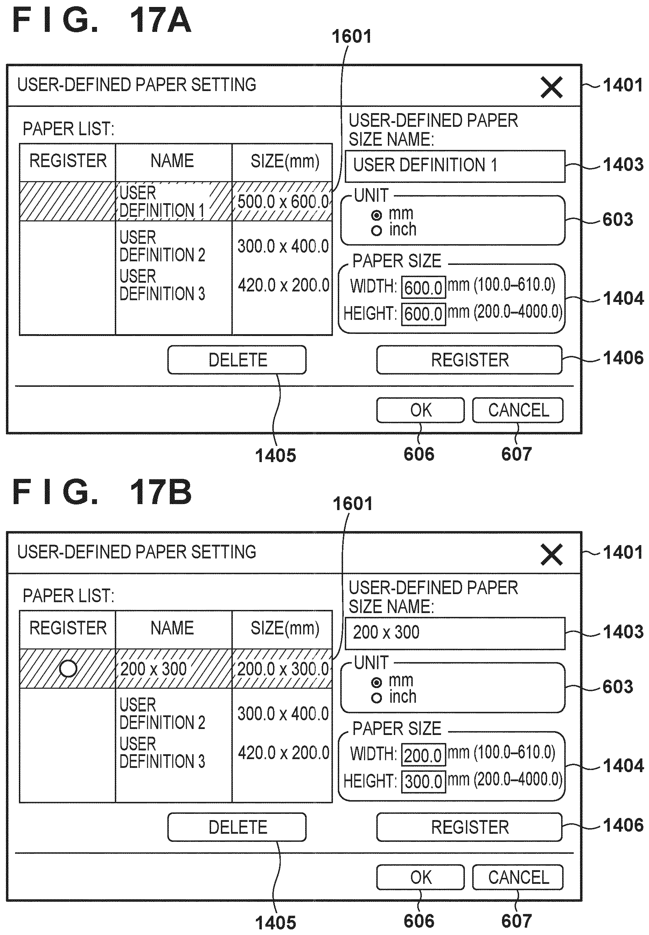

Fig. 15B shows an example in which only the registered user-defined paper size is displayed in the display of the paper list in the user-defined paper setting screen 1401. However, as indicated by a paper list 1601 shown in Fig. 17A, a field "registered" may be provided, and all regions of user-defined paper sizes in the management data may be displayed. Fig. 17A shows a state in which all user-defined paper sizes in the management data are unregistered, and no mark is added to the "registered" field. Fig. 17B shows an example in which the first user-defined paper size is registered with an arbitrary name and size. Hence, in the paper list 1601, a mark is added to the "registered" field of the first user-defined paper size, and the name and size at the time of registration are displayed.

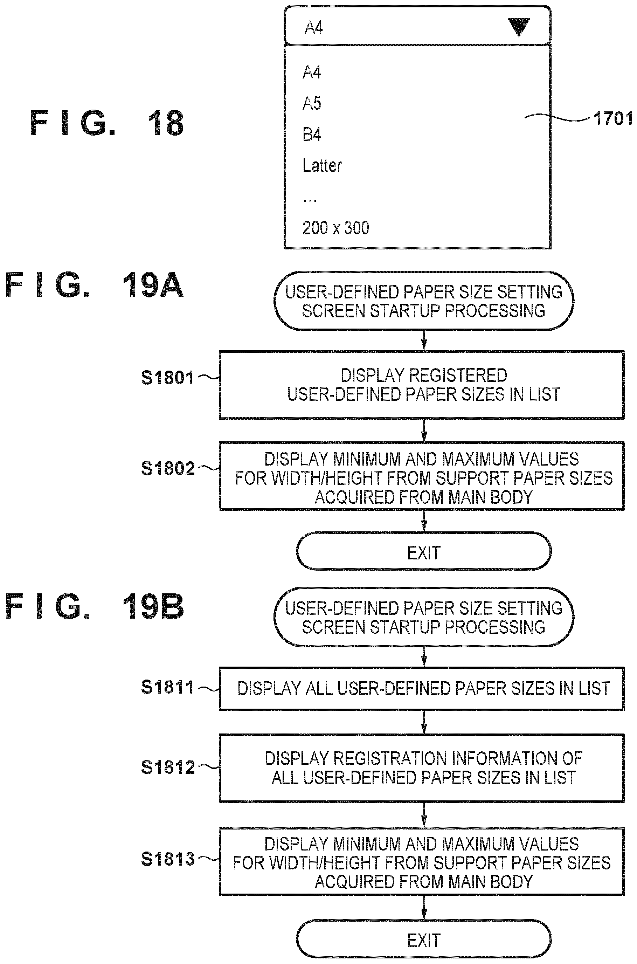

Fig. 18 is a view showing the set values of paper sizes in the print setting screen 501 after registration of the user-defined paper size "200 x 300". As a paper size set value 1701, only the user-defined paper size "200 x 300" registered as a user-defined paper size is displayed, and other unregistered user-defined paper sizes are not displayed.

Figs. 19A and 19B are flowcharts showing processing of the print setting screen extension unit 211, which is executed when the user-defined paper setting button 503 is pressed in the print setting screen 501 according to this embodiment. Fig. 19A is a flowchart showing display processing of the user-defined paper setting screen shown in Figs. 15A and 15B. Processing shown in Fig. 19A is implemented by, for example, the CPU 111 reading out a program stored in the ROM 112 to the RAM 113 and executing it.

If the user-defined paper setting button 503 is pressed, in step S1801, the print setting screen extension unit 211 displays, in the paper list 1402, only registered user-defined paper sizes based on information acquired in step S1303 or S1304. In step S1802, the print setting screen extension unit 211 displays the support ranges of the width and height in the paper size 1404 based on the support paper sizes acquired from the printing apparatus 102. As the support ranges, the maximum values and the minimum values of the width and height are displayed. The maximum values and the minimum values of the width and height can be displayed by referring to information 304 shown in Figs. 3A and 3B.

Fig. 19B is a flowchart showing display processing of the user-defined paper setting screen shown in Figs. 17A and 17B. Processing shown in Fig. 19B is implemented by, for example, the CPU 111 reading out a program stored in the ROM 112 to the RAM 113 and executing it.

In step S1811, the print setting screen extension unit 211 displays all user-defined paper sizes in the paper list 1601. In step S1812, the print setting screen extension unit 211 displays a mark indicating "registered" for each registered user-defined paper size in the paper list 1601 based on information acquired in step S1303 or S1304. In step S1813, the print setting screen extension unit 211 displays the support ranges of the width and height in the paper size 1404 based on the support paper sizes acquired from the printing apparatus 102. As the support ranges, the maximum values and the minimum values of the width and height are displayed.

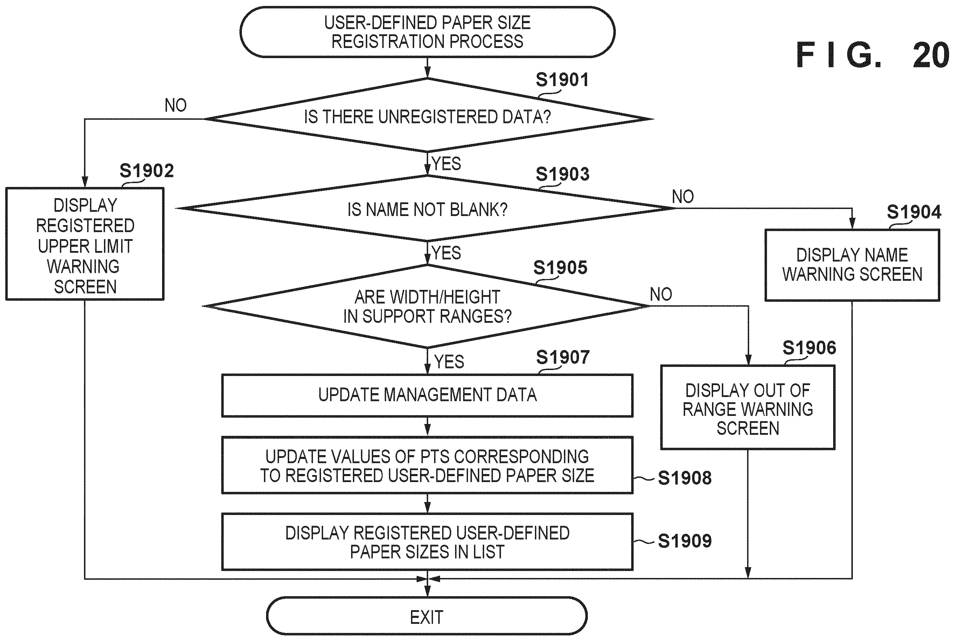

Fig. 20 is a flowchart showing processing of the print setting screen extension unit 211, which is executed when the registration button 1406 in the user-defined paper setting screen 1401 is pressed. Processing shown in Fig. 20 is implemented by, for example, the CPU 111 reading out a program stored in the ROM 112 to the RAM 113 and executing it.

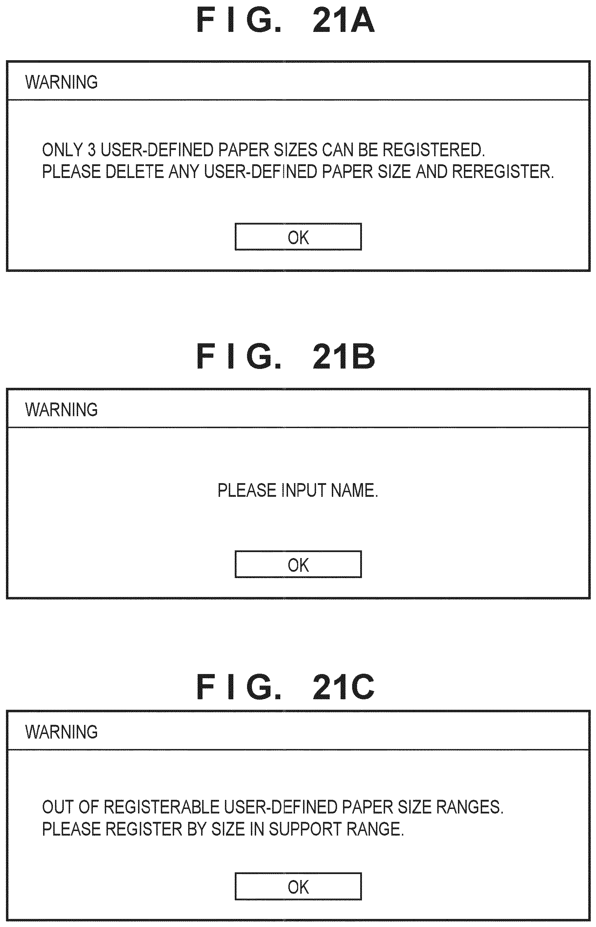

In step S1901, the print setting screen extension unit 211 refers to management data, and determines whether unregistered data exists. If it is determined that unregistered data does not exist, in step S1902, a warning screen shown in Fig. 21A is displayed. The warning screen shown in Fig. 21A warns that the number of registerable user-defined paper sizes has already been reached. When the user presses an OK button in Fig. 21A, the print setting screen extension unit 211 ends the processing shown in Fig. 20, and returns to display of the user-defined paper setting screen 1401. On the other hand, if it is determined that unregistered data exists, the process advances to step S1903.

In step S1903, the print setting screen extension unit 211 determines whether the user-defined paper size name field 1403 in the user-defined paper setting screen 1401 is blank or not. If it is determined that the user-defined paper size name field 1403 is blank, in step S1904, the print setting screen extension unit 211 displays a warning screen shown in Fig. 21B. The warning screen shown in Fig. 21B warns that a name that is information necessary for managing the management data is not input. When the user presses an OK button in Fig. 21B, the print setting screen extension unit 211 ends the processing shown in Fig. 20, and returns to display of the user-defined paper setting screen 1401. On the other hand, if it is determined that the user-defined paper size name field 1403 is not blank, the process advances to step S1905.

In step S1905, the print setting screen extension unit 211 determines whether the width and height input to the paper size 1404 in the user-defined paper setting screen 1401 fall within the ranges of the support size of the printing apparatus 102 acquired in step S1802. If it is determined that the width and height do not fall within the ranges of the support size, that is, fall outside the ranges, in step S1906, the print setting screen extension unit 211 displays a warning screen shown in Fig. 21C. The warning screen shown in Fig. 21C warns that the width and height are values outside the support ranges of the printing apparatus 102. When the user presses an OK button in Fig. 21C, the print setting screen extension unit 211 ends the processing shown in Fig. 20, and returns to display of the user-defined paper setting screen 1401. On the other hand, if it is determined that the width and height fall within the support ranges, the process advances to step S1907.

In step S1907, the print setting screen extension unit 211 updates the management data. More specifically, for example, if the management data shown in Fig. 14 is updated, unregistered Option at the top of the management data is changed to "TRUE" indicating "registered", as shown in Fig. 16. Then, the name input to the user-defined paper size name field 1403 in the user-defined paper setting screen 1401 is set to the display name, and the width and height in the paper size 1404 of the user-defined paper setting screen 1401 are stored as the width and height in the management data. Note that if the unit of the width and height in the paper size 1404 of the user-defined paper setting screen 1401 and the unit of the width and height in the management data are different, the data is stored after converting the unit.

In step S1908, the print setting screen extension unit 211 updates the custom size parameters of the print setting (PT) corresponding to Option of the registered user-defined paper size by the width and height in the paper size 1404, which are input in the user-defined paper setting screen 1401. In this embodiment, as an example, since Option of UserDefinition1 is updated, PageMediaSizeMediaSizeWidth1 and PageMediaSizeMediaSizeHeight1 are updated. Note that if the unit of the width and height in the paper size 1404, which are input in the user-defined paper setting screen 1401, and the unit of the custom size parameters of the print setting (PT) are different, the data is set after converting the unit.

In step S1909, the print setting screen extension unit 211 displays the registered user-defined paper size in the paper list 1402 of the user-defined paper setting screen 1401 with the registered name and size. Note that in this processing, a case where only registered user-defined paper sizes are displayed in the paper list of the user-defined paper setting screen 1401, like the paper list 1402, has been described. However, like the paper list 1601, all user-defined paper sizes may be displayed, and the display of a user-defined paper size with a mark in the "registered" field may be updated.

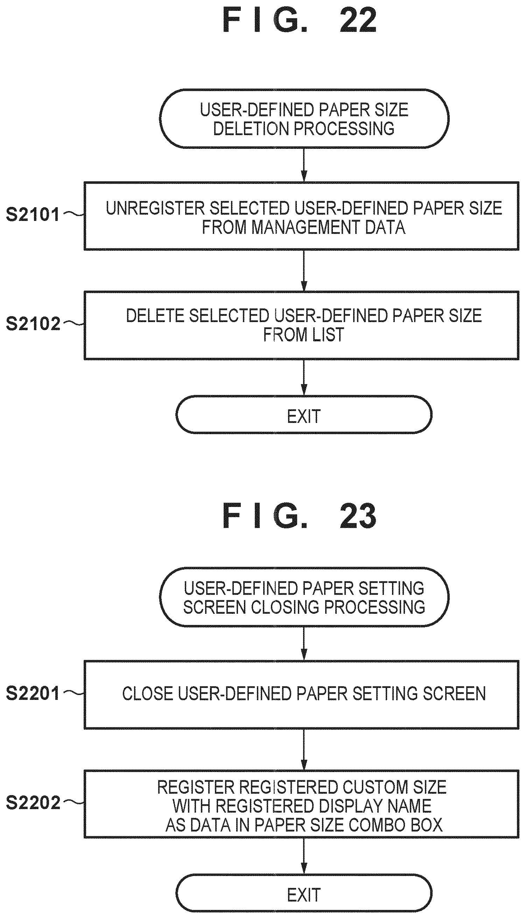

Fig. 22 is a flowchart showing processing of the print setting screen extension unit 211, which is executed when the deletion button 1405 is pressed in a state in which the user selects a user-defined paper size of a deletion target in the paper list 1402 of the user-defined paper setting screen 1401. Processing shown in Fig. 22 is implemented by, for example, the CPU 111 reading out a program stored in the ROM 112 to the RAM 113 and executing it.

If the deletion button 1405 in the user-defined paper setting screen 1401 is pressed, in step S2101, the print setting screen extension unit 211 changes the management data of Option corresponding to the user-defined paper size selected in the paper list 1402 or the paper list 1601 to "unregistered". More specifically, for example, if the deletion button 1405 is pressed in a state in which the user-defined paper size of "200 x 300" shown in Fig. 15B is selected, "TRUE" of the item "registered" of UserDefinition1 in Fig. 16 is changed to "FALSE" indicating "unregistered".

In step S2102, the print setting screen extension unit 211 sets the user-defined paper size selected in the paper list 1402 to non-display in the paper list 1402. Note that in this processing, a case where only registered user-defined paper sizes are displayed in the paper list of the user-defined paper setting screen 1401, like the paper list 1402, has been described. However, like the paper list 1601, all user-defined paper sizes may be displayed, and the display of a user-defined paper size with a mark in the "registered" field may be updated.

Fig. 23 is a flowchart showing processing of the print setting screen extension unit 211, which is executed when the user presses an OK button 606 or a cancel button 607 in the user-defined paper setting screen 1401. Processing shown in Fig. 23 is implemented by, for example, the CPU 111 reading out a program stored in the ROM 112 to the RAM 113 and executing it.

If the OK button 606 or the cancel button 607 in the user-defined paper setting screen 1401 is pressed, in step S2201, the print setting screen extension unit 211 closes the user-defined paper setting screen 1401. In step S2202, the print setting screen extension unit 211 displays only registered user-defined paper sizes in the paper size option 1701.

As described above, according to this embodiment, by the extension application, display of a paper size can be controlled based on registration/deletion of an arbitrary paper size by the user. As a result, a user-defined paper size registered by the user can identifiably be displayed, and usability can further be improved.

### [Second Embodiment]

The second embodiment will be described below concerning differences from the first example useful for understanding the invention and the first embodiment. In this embodiment, a configuration in which a paper size database (Form DB) provided by an OS (Windows) is used as management data of user-defined paper sizes will be described.

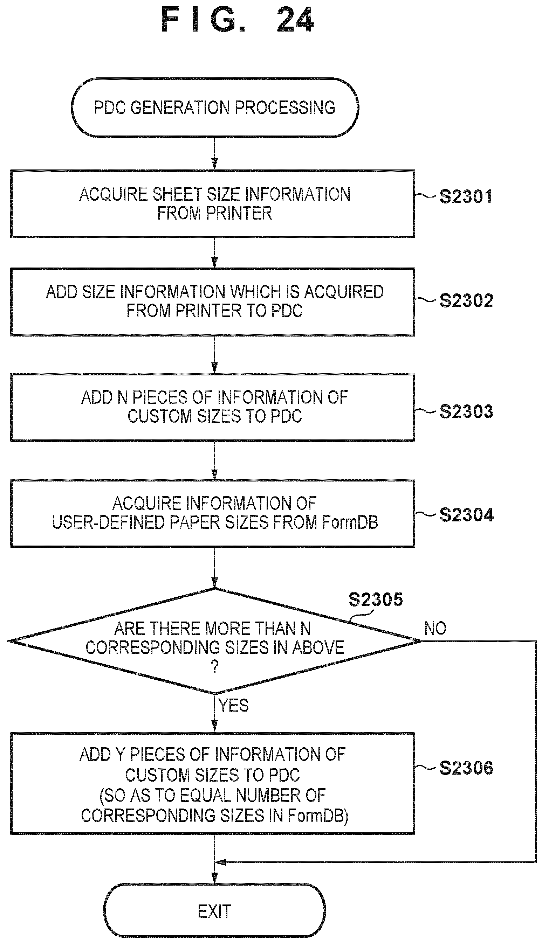

Fig. 24 is a flowchart showing processing executed when a print function extension unit 213 edits the print function information 203 when an extension application 210 is associated with a printing apparatus 102 and print data generation software 202 for the first time. Processing shown in Fig. 24 is implemented by, for example, a CPU 111 reading out a program stored in a ROM 112 to a RAM 113 and executing it.

Steps S2301 to S2303 are the same as described concerning steps S401 to S403 in Fig. 4, and a description thereof will be omitted.

In step S2304, the print function extension unit 213 acquires, from the Form DB, the information of custom sizes within support paper size ranges acquired in step S2301.

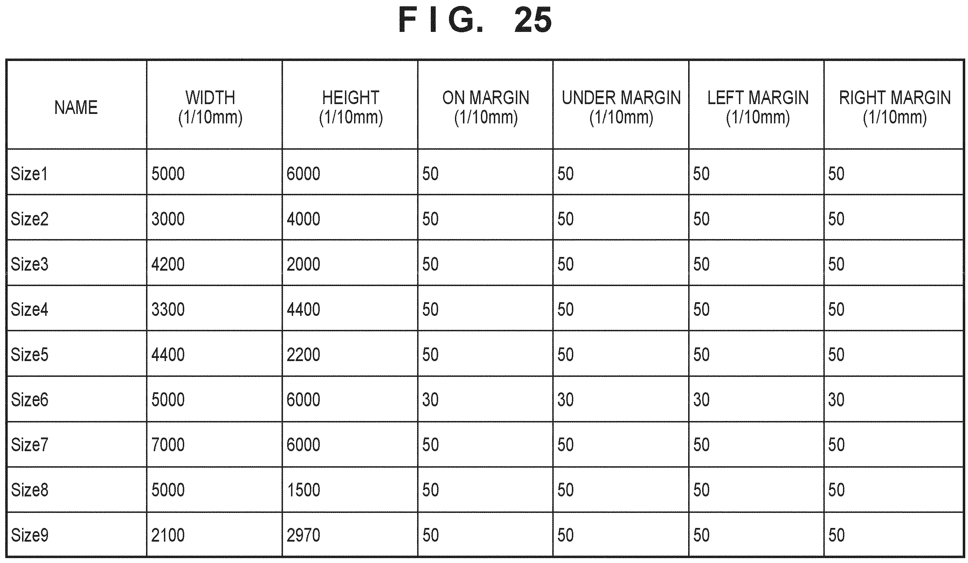

Fig. 25 is a view showing an example of the Form DB. In the Form DB, upper, lower, left, and right margins are managed, and a size for which the width and height fall within the support ranges of the printing apparatus 102, and the support margins equal is defined as a custom size (that is, a user-defined paper size) that satisfies conditions. Note that standard sizes supported by the printing apparatus 102, which are acquired in step S2301, are registered in the Form DB in some cases, so that the same sizes as the standard sizes may be excluded from the determination target of custom sizes satisfying the conditions.

For example, the printing apparatus 102 connected in this embodiment is assumed to support a margin of 50 mm, a width of 100 to 610 mm, and a height of 200 to 4,000 mm. In this case, on the Form DB shown in Fig. 25, Size1 to Size5 are determined to satisfy the conditions. Size6 falls outside the margin support, and is not determined to satisfy the conditions. Size7 has a width falling outside the support range, and is not determined to satisfy the conditions. Size8 has a height falling outside the support range, and is not determined to satisfy the conditions. Size9 equals a standard size provided by the printing apparatus 102, and is not determined to satisfy the conditions.

In step S2305, the print function extension unit 213 determines whether the number of custom sizes determined to satisfy the conditions in the Form DB is larger than the number of custom sizes added in step S2303. If it is determined that the number of custom sizes determined to satisfy the conditions is larger, in step S2306, the print function extension unit 213 adds the information of custom sizes in a PDC 301 such that the number equals the number of support sizes in the Form DB. More specifically, for example, if a print setting screen extension unit 211 adds three custom sizes in step S2303, five custom sizes exist in the Form DB shown in Fig. 25. Hence, the regions of the remaining two custom sizes are added to the PDC 301. The Form DB is a region that is changeable and commonly usable for any driver. For this reason, in this embodiment, the number of custom sizes added to the PDC 203 is adjusted, thereby making it follow the number of custom sizes satisfying the conditions in the Form DB.

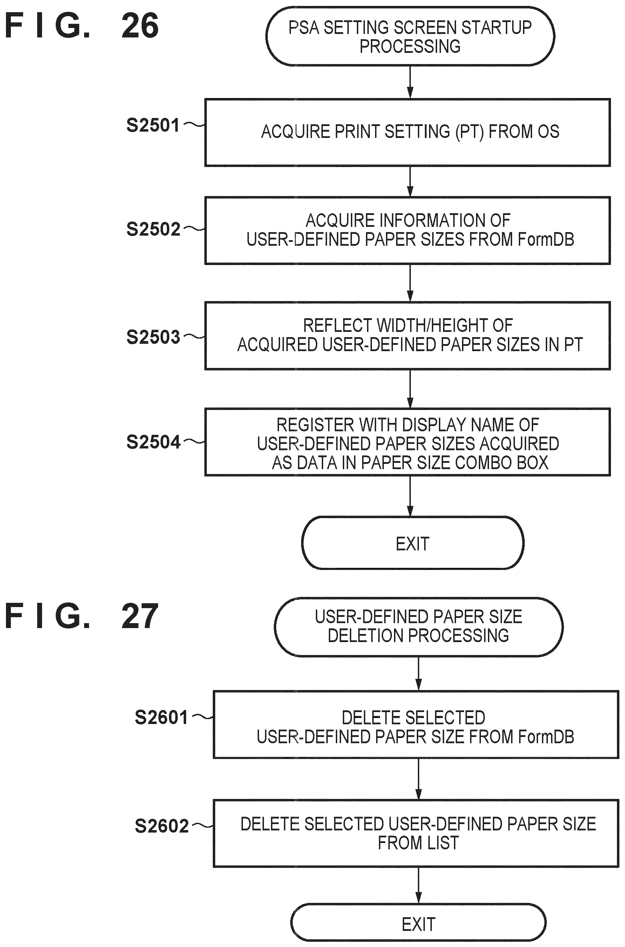

Fig. 26 is a flowchart showing processing of the print setting screen extension unit 211, which is performed when the print setting screen extension unit 211 displays a print setting screen. Processing shown in Fig. 26 is implemented by, for example, the CPU 111 reading out a program stored in the ROM 112 to the RAM 113 and executing it.

Step S2501 is the same as described concerning step S901 in Fig. 10, and a description thereof will be omitted.

In step S2502, the print setting screen extension unit 211 acquires information of user-defined paper sizes from the Form DB. Here, which custom size is determined as a user-defined paper size on the Form DB is as described above.

In step S2503, the print setting screen extension unit 211 registers the width and height of each user-defined paper size acquired in step S2501 in the print setting (PT). In step S2504, the print setting screen extension unit 211 registers, as data in the paper size combo box, each user-defined paper size with the name of the user-defined paper size acquired from the Form DB.

Fig. 27 is a flowchart showing processing of the print setting screen extension unit 211, which is executed when a deletion button 1405 is pressed in a state in which a user-defined paper size of a deletion target is selected in a paper list 1402 in this embodiment. Processing shown in Fig. 27 is implemented by, for example, the CPU 111 reading out a program stored in the ROM 112 to the RAM 113 and executing it.

If the deletion button 1405 in a user-defined paper setting screen 1401 is pressed, in step S2601, the print setting screen extension unit 211 deletes data in the Form DB corresponding to the user-defined paper size selected in the paper list 1402 or a paper list 1601.

As described above, according to this embodiment, the extension application allows the user to register a plurality of arbitrary paper sizes using the Form DB, and the user can perform printing by setting an arbitrary registered paper size. Also, if the Form DB is used, the same user-defined paper sizes can be used under a common environment using the same OS.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to examples useful for understanding the invention as well as exemplary embodiments, it is to be understood that the invention is not limited to the disclosed exemplary embodiments. The scope of the following claims is to be accorded the broadest interpretation so as to encompass all such modifications.

## Claims

1. A control method implemented by executing a print setting application (210) that is stored in an information processing apparatus (101) that stores a standard class driver configured to inquire about capability information in accordance with the Internet Printing Protocol, and extends a function of the standard class driver, comprising:
displaying, on a display unit (119) of the information processing apparatus (101), a first identifier corresponding to a specific paper size acquired from a printer and a second identifier indicating an arbitrary paper size as candidates of a paper size to be used for printing;
accepting a setting of a paper size corresponding to the second identifier; and
notifying an image forming apparatus (102) of the paper size based on selection of the second identifier,
**characterized by** further comprising
receiving information about a size settable as a paper size, the information representing a maximum value and a minimum value of a paper size supported by the image forming apparatus (102),
determining (S1905), based on the received information about the size, whether the accepted paper size can be set, and
making (S1906) a notification on condition that a size set by a user is a value larger than the maximum value or a value smaller than the minimum value,
wherein the method further comprises
when the size set by the user falls between said minimum value and maximum value, setting a field in stored management data indicating registration of the user set paper size,
wherein only registered user set paper sizes are displayed to the user on the display unit.

2. The method according to claim 1, further comprising:
storing, in the information processing apparatus (101), information based on the capability information acquired from the image forming apparatus (102); and
adding information representing the arbitrary paper size to the stored information.

3. The method according to claim 1, further comprising displaying a screen for setting a paper size corresponding to the arbitrary paper size.

4. A non-transitory computer-readable storage medium storing a print setting application (210) that extends a function of a standard class driver configured to inquire about capability information in accordance with the Internet Printing Protocol, wherein a control method implemented by executing the print setting application (210) comprises:
displaying, on a display unit (119), a first identifier corresponding to a specific paper size acquired from a printer and a second identifier indicating an arbitrary paper size as candidates of a paper size to be used for printing;
accepting a setting of a paper size corresponding to the second identifier; and
notifying an image forming apparatus (102) of the paper size based on selection of the second identifier,
**characterized by** further comprising
receiving information about a size settable as a paper size, the information representing a maximum value and a minimum value of a paper size supported by the image forming apparatus (102),
determining, based on the received information about the size, whether the accepted paper size can be set, and
making a notification on condition that a size set by a user is a value larger than the maximum value or a value smaller than the minimum value
wherein the control method further comprises
when the size set by the user falls between said minimum value and maximum value, setting a field in stored management data indicating registration of the user set paper size,
wherein only registered user set paper sizes are displayed to the user on the display unit.

5. The medium according to claim 4, wherein the control method further comprises:
storing, in the information processing apparatus (101), information based on the capability information acquired from the image forming apparatus (102); and
adding information representing the arbitrary paper size to the stored information.

6. The medium according to claim 4, wherein the control method further comprises displaying a screen for setting a paper size corresponding to the arbitrary paper size.

7. An information processing apparatus (101) that is configured to store a standard class driver configured to inquire about capability information in accordance with the Internet Printing Protocol, comprising: display means (119) configured to display, on the information processing apparatus (101), a first identifier corresponding to a specific paper size acquired from a printer and a second identifier indicating an arbitrary paper size as candidates of a paper size to be used for printing; acceptance means configured to accept a setting of a paper size corresponding to the second identifier; and notification means configured to notify an image forming apparatus (102) of the paper size based on selection of the second identifier, **characterized by** further comprising means configured to receive information about a size settable as a paper size, the information representing a maximum value and a minimum value of a paper size supported by the image forming apparatus (102), means configured to determine, based on the received information about the size, whether the accepted paper size can be set, and means configured to make a notification on condition that a size set by a user is a value larger than the maximum value or a value smaller than the minimum value, and means configured to set, when the size set by the user falls between said minimum value and maximum value, setting a field in stored management data indicating registration of the user set paper size, wherein the display means (119) is configured to display only registered user set paper sizes to the user.

8. A computer program comprising instructions which when executed by an information processing apparatus according to claim 7, cause said information processing apparatus to execute the method of claim 1.

## Patentansprüche

1. Steuerungsverfahren, das implementiert wird, indem eine Druckeinstellungsanwendung (210) ausgeführt wird, die in einem Informationsverarbeitungsgerät (101) gespeichert ist, das einen Standardklassentreiber speichert, der konfiguriert ist, über Fähigkeitsinformationen entsprechend dem Internet-Printing-Protocol abzufragen, und eine Funktion des Standardklassentreibers erweitert, umfassend:
ein Anzeigen auf einer Anzeigeeinheit (119) des Informationsverarbeitungsgeräts (101) eines ersten Identifizierers, der einer spezifischen Papiergröße entspricht, die von einem Drucker beschafft wird, und eines zweiten Identifizierers, der eine beliebige Papiergröße angibt, als Kandidaten einer Papiergröße, die für ein Drucken zu verwenden ist;
ein Annehmen einer Einstellung einer Papiergröße entsprechend dem zweiten Identifizierer; und
ein Benachrichtigen eines Bilderzeugungsgeräts (102) über die Papiergröße auf der Grundlage einer Auswahl des zweiten Identifizierers,
ferner **gekennzeichnet durch**
ein Empfangen von Informationen über eine Größe, die als eine Papiergröße einstellbar ist, wobei die Informationen einen maximalen Wert und einen minimalen Wert einer Papiergröße, die durch das Bilderzeugungsgerät (102) unterstützt werden, darstellen,
ein Bestimmen (S1905) auf der Grundlage der empfangenen Informationen über die Größe, ob die angenommene Papiergröße eingestellt werden kann, und
ein Ausführen (S1906) einer Benachrichtigung unter der Bedingung, dass eine Größe, die durch einen Benutzer eingestellt wird, ein Wert ist, der größer als der maximale Wert ist, oder ein Wert ist, der kleiner als der minimale Wert ist,
wobei das Verfahren ferner umfasst,
wenn die Größe, die durch den Benutzer eingestellt wird, zwischen den minimalen Wert und den maximalen Wert fällt, ein Einstellen eines Felds in gespeicherten Verwaltungsdaten, das eine Registrierung der durch den Benutzer eingestellten Papiergröße angibt,
wobei lediglich registrierte, durch den Benutzer eingestellte Papiergrößen dem Benutzer auf der Anzeigeeinheit angezeigt werden.

2. Verfahren nach Anspruch 1, ferner mit:
einem Speichern in dem Informationsverarbeitungsgerät (101) von Informationen auf der Grundlage der Fähigkeitsinformationen, die von dem Bilderzeugungsgerät (102) beschafft werden; und
einem Hinzufügen von Informationen, die die beliebige Papiergröße darstellen, zu den gespeicherten Informationen.

3. Verfahren nach Anspruch 1, ferner mit einem Anzeigen eines Bildschirms zur Einstellung einer Papiergröße entsprechend der beliebigen Papiergröße.

4. Nicht vergängliches computerlesbares Speichermedium, das eine Druckeinstellungsanwendung (210) speichert, die eine Funktion eines Standardklassentreibers erweitert, der konfiguriert ist, über Fähigkeitsinformationen entsprechend dem Internet-Printing-Protocol abzufragen, wobei ein Steuerungsverfahren, das implementiert wird, indem die Druckeinstellungsanwendung (210) ausgeführt wird, umfasst:
ein Anzeigen auf einer Anzeigeeinheit (119) eines ersten Identifizierers, der einer spezifischen Papiergröße entspricht, die von einem Drucker beschafft wird, und eines zweiten Identifizierers, der eine beliebige Papiergröße angibt, als Kandidaten einer Papiergröße, die für ein Drucken zu verwenden ist;
ein Annehmen einer Einstellung einer Papiergröße entsprechend dem zweiten Identifizierer; und
ein Benachrichtigen eines Bilderzeugungsgeräts (102) über die Papiergröße auf der Grundlage einer Auswahl des zweiten Identifizierers,
ferner **gekennzeichnet durch**
ein Empfangen von Informationen über eine Größe, die als eine Papiergröße einstellbar ist, wobei die Informationen einen maximalen Wert und einen minimalen Wert einer Papiergröße, die durch das Bilderzeugungsgerät (102) unterstützt werden, darstellen,
ein Bestimmen auf der Grundlage der empfangenen Informationen über die Größe, ob die angenommene Papiergröße eingestellt werden kann, und
ein Ausführen einer Benachrichtigung unter der Bedingung, dass eine Größe, die durch einen Benutzer eingestellt wird, ein Wert ist, der größer als der maximale Wert ist, oder ein Wert ist, der kleiner als der minimale Wert ist,
wobei das Steuerungsverfahren ferner umfasst,
wenn die Größe, die durch den Benutzer eingestellt wird, zwischen den minimalen Wert und den maximalen Wert fällt, ein Einstellen eines Felds in gespeicherten Verwaltungsdaten, das eine Registrierung der durch den Benutzer eingestellten Papiergröße angibt,
wobei lediglich registrierte, durch den Benutzer eingestellte Papiergrößen dem Benutzer auf der Anzeigeeinheit angezeigt werden.

5. Medium nach Anspruch 4, wobei das Steuerungsverfahren ferner umfasst:
ein Speichern in dem Informationsverarbeitungsgerät (101) von Informationen auf der Grundlage der Fähigkeitsinformationen, die von dem Bilderzeugungsgerät (102) beschafft werden; und
ein Hinzufügen von Informationen, die die beliebige Papiergröße darstellen, zu den gespeicherten Informationen.

6. Medium nach Anspruch 4, wobei das Steuerungsverfahren ferner ein Anzeigen eines Bildschirms zur Einstellung einer Papiergröße entsprechend der beliebigen Papiergröße umfasst.

7. Informationsverarbeitungsgerät (101), das konfiguriert ist, einen Standardklassentreiber zu speichern, der konfiguriert ist, über Fähigkeitsinformationen entsprechend dem Internet-Printing-Protocol abzufragen, mit:
einer Anzeigeeinrichtung (119), die konfiguriert ist, auf dem Informationsverarbeitungsgerät (101) einen ersten Identifizierer, der einer spezifischen Papiergröße entspricht, die von einem Drucker beschafft wird, und einen zweiten Identifizierer, der eine beliebige Papiergröße angibt, als Kandidaten einer Papiergröße, die für ein Drucken zu verwenden ist, anzuzeigen; einer Annahmeeinrichtung, die konfiguriert ist, eine Einstellung einer Papiergröße entsprechend dem zweiten Identifizierer anzunehmen; und eine Benachrichtigungseinrichtung, die konfiguriert ist, ein Bilderzeugungsgerät (102) über die Papiergröße auf der Grundlage einer Auswahl des zweiten Identifizierers zu benachrichtigen, ferner **gekennzeichnet durch** eine Einrichtung, die konfiguriert ist, Informationen über eine Größe zu empfangen, die als eine Papiergröße einstellbar ist, wobei die Informationen einen maximalen Wert und einen minimalen Wert einer Papiergröße darstellen, die durch das Bilderzeugungsgerät (102) unterstützt werden, eine Einrichtung, die konfiguriert ist, auf der Grundlage der empfangenen Informationen über die Größe zu bestimmen, ob die angenommene Papiergröße eingestellt werden kann, und eine Einrichtung, die konfiguriert ist, eine Benachrichtigung unter der Bedingung auszuführen, dass eine Größe, die durch einen Benutzer eingestellt wird, ein Wert ist, der größer als der maximale Wert ist, oder ein Wert ist, der kleiner als der minimale Wert ist, und eine Einrichtung, die konfiguriert ist, wenn die Größe, die durch den Benutzer eingestellt wird, zwischen den minimalen Wert und den maximalen Wert fällt, ein Feld in gespeicherten Verwaltungsdaten einzustellen, das eine Registrierung der durch den Benutzer eingestellten Papiergröße angibt, wobei die Anzeigeeinrichtung (119) konfiguriert ist, lediglich registrierte, durch den Benutzer eingestellte Papiergrößen dem Benutzer anzuzeigen.

8. Computerprogramm, das Anweisungen umfasst, die, wenn sie durch ein Informationsverarbeitungsgerät gemäß Anspruch 7 ausgeführt werden, das Informationsverarbeitungsgerät veranlassen, das Verfahren gemäß Anspruch 1 auszuführen.

## Revendications

1. Procédé de commande mis en œuvre en exécutant une application de réglage d'impression (210) qui est stockée dans un appareil de traitement d'informations (101) qui stocke un pilote de classe standard configuré pour demander des informations de capacité conformément au protocole d'impression Internet, et étend une fonction du pilote de classe standard, comprenant :
l'affichage, sur une unité d'affichage (119) de l'appareil de traitement d'informations (101), d'un premier identifiant correspondant à une taille de papier spécifique acquise à partir d'une imprimante et d'un second identifiant indiquant une taille de papier arbitraire en tant que candidats d'une taille de papier à utiliser pour l'impression ;
l'acceptation d'un réglage d'une taille de papier correspondant au second identifiant ; et
la notification à un appareil de formation d'image (102) de la taille de papier sur la base d'une sélection du second identifiant,
**caractérisé en ce qu'**il comprend en outre
la réception d'informations sur une taille réglable en tant que taille de papier, les informations représentant une valeur maximale et une valeur minimale d'une taille de papier prise en charge par l'appareil de formation d'image (102),
le fait de déterminer (S1905), sur la base des informations reçues sur la taille, si la taille de papier acceptée peut être réglée, et
la réalisation (S1906) d'une notification à condition qu'une taille réglée par un utilisateur soit une valeur supérieure à la valeur maximale ou une valeur inférieure à la valeur minimale,
dans lequel le procédé comprend en outre
lorsque la taille réglée par l'utilisateur se situe entre lesdites valeur minimale et valeur maximale, le réglage d'un champ dans des données de gestion stockées indiquant l'enregistrement de la taille de papier réglée par l'utilisateur,
dans lequel uniquement les tailles de papier réglées par l'utilisateur enregistrées sont affichées pour l'utilisateur sur l'unité d'affichage.

2. Procédé selon la revendication 1, comprenant en outre :
le stockage, dans l'appareil de traitement d'informations (101), d'informations sur la base des informations de capacité acquises à partir de l'appareil de formation d'image (102) ; et
l'ajout d'informations représentant la taille de papier arbitraire aux informations stockées.

3. Procédé selon la revendication 1, comprenant en outre l'affichage d'un écran pour régler une taille de papier correspondant à la taille de papier arbitraire.

4. Support de stockage non transitoire lisible par ordinateur stockant une application de réglage d'impression (210) qui étend une fonction d'un pilote de classe standard configuré pour demander des informations de capacité conformément au protocole d'impression Internet, dans lequel un procédé de commande mis en œuvre en exécutant l'application de réglage d'impression (210) comprend :
l'affichage, sur une unité d'affichage (119), d'un premier identifiant correspondant à une taille de papier spécifique acquise à partir d'une imprimante et d'un second identifiant indiquant une taille de papier arbitraire en tant que candidats d'une taille de papier à utiliser pour l'impression ;
l'acceptation d'un réglage d'une taille de papier correspondant au second identifiant ; et
la notification à un appareil de formation d'image (102) de la taille de papier sur la base d'une sélection du second identifiant,
**caractérisé en ce qu'**il comprend en outre
la réception d'informations sur une taille réglable en tant que taille de papier, les informations représentant une valeur maximale et une valeur minimale d'une taille de papier prise en charge par l'appareil de formation d'image (102),
le fait de déterminer, sur la base des informations reçues sur la taille, si la taille de papier acceptée peut être réglée, et
la réalisation d'une notification à condition qu'une taille réglée par un utilisateur soit une valeur supérieure à la valeur maximale ou une valeur inférieure à la valeur minimale
dans lequel le procédé de commande comprend en outre
lorsque la taille réglée par l'utilisateur se situe entre lesdites valeur minimale et valeur maximale, le réglage d'un champ dans des données de gestion stockées indiquant l'enregistrement de la taille de papier réglée par l'utilisateur,
dans lequel uniquement les tailles de papier réglées par l'utilisateur enregistrées sont affichées pour l'utilisateur sur l'unité d'affichage.

5. Support selon la revendication 4, dans lequel le procédé de commande comprend en outre :
le stockage, dans l'appareil de traitement d'informations (101), d'informations sur la base des informations de capacité acquises à partir de l'appareil de formation d'image (102) ; et
l'ajout d'informations représentant la taille de papier arbitraire aux informations stockées.

6. Support selon la revendication 4, dans lequel le procédé de commande comprend en outre l'affichage d'un écran pour régler une taille de papier correspondant à la taille de papier arbitraire.

7. Appareil de traitement d'informations (101) qui est configuré pour stocker un pilote de classe standard configuré pour demander des informations de capacité conformément au protocole d'impression Internet, comprenant : un moyen d'affichage (119) configuré pour afficher, sur l'appareil de traitement d'informations (101), un premier identifiant correspondant à une taille de papier spécifique acquise à partir d'une imprimante et un second identifiant indiquant une taille de papier arbitraire en tant que candidats d'une taille de papier à utiliser pour l'impression ; un moyen d'acceptation configuré pour accepter un réglage d'une taille de papier correspondant au second identifiant ; et un moyen de notification configuré pour notifier à un appareil de formation d'image (102) la taille de papier sur la base d'une sélection du second identifiant, **caractérisé en ce qu'**il comprend en outre un moyen configuré pour recevoir des informations sur une taille réglable en tant que taille de papier, les informations représentant une valeur maximale et une valeur minimale d'une taille de papier prise en charge par l'appareil de formation d'image (102), un moyen configuré pour déterminer, sur la base des informations reçues sur la taille, si la taille de papier acceptée peut être réglée, et un moyen configuré pour réaliser une notification à condition qu'une taille réglée par un utilisateur soit une valeur supérieure à la valeur maximale ou une valeur inférieure à la valeur minimale, et un moyen configuré pour régler, lorsque la taille réglée par l'utilisateur se situe entre lesdites valeur minimale et valeur maximale, un champ dans des données de gestion stockées indiquant l'enregistrement de la taille de papier réglée par l'utilisateur, dans lequel le moyen d'affichage (119) est configuré pour afficher uniquement les tailles de papier réglées par l'utilisateur enregistrées pour l'utilisateur.

8. Programme d'ordinateur comprenant des instructions qui, lorsqu'elles sont exécutées par un appareil de traitement d'informations selon la revendication 7, amènent ledit appareil de traitement d'informations à exécuter le procédé selon la revendication 1.
